(19) Europäisches Patentamt
European Patent Office
Office européen des brevets

(11) EP 4 541 854 A1

(12) EUROPEAN PATENT APPLICATION
published in accordance with Art. 153(4) EPC

(43) Date of publication:
23.04.2025 Bulletin 2025/17

(21) Application number: 23823649.1

(22) Date of filing: 25.05.2023

(51) International Patent Classification (IPC):
*C08L 69/00* (2006.01) *C08K 3/34* (2006.01)
*C08K 5/521* (2006.01) *C08L 55/02* (2006.01)

(52) Cooperative Patent Classification (CPC):
C08K 3/34; C08K 5/521; C08L 55/02; C08L 69/00

(86) International application number:
PCT/JP2023/019443

(87) International publication number:
WO 2023/243350 (21.12.2023 Gazette 2023/51)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 17.06.2022 JP 2022097979

(71) Applicant: Teijin Limited
Osaka 530-0005 (JP)

(72) Inventor: ICHIKAWA Hiroshi
Osaka-shi Osaka 530-0005 (JP)

(74) Representative: Kraus & Lederer PartGmbB
Thomas-Wimmer-Ring 15
80539 München (DE)

# (54) POLYCARBONATE RESIN COMPOSITION AND MOLDED ARTICLE COMPRISING SAME

(57) The invention provides a polycarbonate resin composition that is excellent in flowability and heat resistance and has a low linear expansion coefficient. The invention is a polycarbonate resin composition including, per 100 parts by weight of a component including 20 to 90 parts by weight of (A) a polycarbonate-based resin (component A) and 80 to 10 parts by weight of (B) an ABS resin (component B), 5 to 45 parts by weight of (C) a silicate mineral (component C). The polycarbonate resin composition is characterized in that the component B has an $SO_4^{2-}$ content of 1 ppm or more and a $PO_4^{3-}$ content of less than 1.5 ppm.

EP 4 541 854 A1

## Description

Technical Field

The present invention relates to a polycarbonate resin composition and also to a molded article made thereof. It more specifically relates to a polycarbonate resin composition that contains a specific ABS resin and a silicate mineral, is excellent in fluidity and heat resistance, and has a low linear expansion coefficient, and also to a molded article made thereof.

Background Art

Polycarbonate resins have excellent mechanical properties and thermal properties and thus are industrially widely used. However, polycarbonate resins have the drawbacks of poor flowability and inferior moldability because of their high melt viscosity. In order to improve the fluidity of polycarbonate resins, a large number of polymer alloys with other thermoplastic resins have been developed. Among them, polymer alloys with styrene-based resins typified by ABS resins are widely used in the fields of OA appliances, electrical and electronic devices, and automobiles.

In the field of automobiles, for exterior members such as garnishes and spoilers, materials having low linear expansion coefficients are required for the purpose of reducing the gap between members. For this reason, resin compositions obtained by incorporating inorganic fillers such as talc and mica into polycarbonate resins have been developed. However, the incorporation of inorganic fillers causes problems such as an increase in specific gravity, a decrease in impact resistance, and a decrease in thermal stability, leading to the occurrence of silver streaks, for example. Therefore, there is a demand for improvement.

In response to the above demand, for example, a resin composition obtained by incorporating a fluorine-containing resin and an olefin-maleic anhydride copolymer into a resin composition composed of a polycarbonate resin and talc, which thus exhibits a low linear expansion coefficient and high impact resistance, has been disclosed (PTL 1). However, there has been a problem in that in the case where an olefin-maleic anhydride copolymer is incorporated into a resin composition composed of a polycarbonate resin, an ABS resin, and talc, although the impact resistance improves, the linear expansion coefficient increases. In addition, a resin composition obtained by incorporating a specific alkoxysilane compound into a resin composition composed of a polycarbonate resin, a styrene-based resin, and an inorganic filler, which thus exhibits high impact resistance and excellent thermal stability, has been disclosed (PTL 2). However, because the linear expansion coefficient depends solely on the amount of inorganic filler incorporated, there has been a problem in that aiming for further reduction of linear expansion is accompanied by a decrease in impact resistance and an increase in specific gravity.

Citation List

Patent Literature

PTL 1: JP2020-158663A
PTL 2: JP2004-168822A

Summary of Invention

Technical Problem

In light of the above, an object of the invention is to provide a polycarbonate resin composition that is excellent in flowability and heat resistance and has a low linear expansion coefficient, and also a molded article made thereof.

Solution to Problem

The present inventors have conducted extensive research to solve the above problems. As a result, they have found that by adding a predetermined amount of silicate mineral to a resin component including a polycarbonate-based resin and a specific ABS resin, a resin composition that is excellent in flowability and heat resistance and has a low linear expansion coefficient can be obtained, and thus accomplished the invention.

That is, the invention is as follows.

1. A polycarbonate resin composition including, per 100 parts by weight of a component including 20 to 90 parts by weight of (A) a polycarbonate-based resin (component A) and 80 to 10 parts by weight of (B) an ABS resin (component B), 5 to 45 parts by weight of (C) a silicate mineral (component C), in which the component B has an $SO_4^{2-}$ content of 1 ppm or more and a $PO_4^{3-}$ content of less than 1.5 ppm.
2. The polycarbonate resin composition according to item 1 above, including 0.001 to 1 part by weight of (D) a phosphorus-based stabilizer (component D) per 100 parts by weight of the component including the component A and the component B.
3. The polycarbonate resin composition according to item 2 above, in which the component D is a phosphonic acid ester having an acid value of 0.01 to 0.30 mgKOH/g.
4. The polycarbonate resin composition according to item 3 above, in which the component D is triethyl phosphonoacetate.
5. A molded article made of the polycarbonate resin composition according to any of items 1 to 4 above.

Advantageous Effects of Invention

The polycarbonate resin composition of the invention is excellent in fluidity and heat resistance and has a low linear expansion coefficient, and thus is broadly useful in housing equipment applications, building material applications, daily-life material applications, infrastructure equipment applications, automobile applications, OA/EE applications, outdoor appliance applications, and other various fields. Therefore, the invention is industrially extremely effective.

Description of Embodiments

Hereinafter, the invention will be described in detail.

<Component A: Polycarbonate-Based Resin>

The polycarbonate-based resin used in the invention is obtained by allowing a dihydric phenol to react with a carbonate precursor. As the reaction method, for example, an interfacial polymerization method, a melt transesterification method, a solid-phase transesterification method for carbonate prepolymers, a ring-opening polymerization method for cyclic carbonate compounds, and the like can be mentioned.
As typical examples of dihydric phenols used here, hydroquinone, resorcinol, 4,4'-biphenol, 1,1-bis(4-hydroxyphenyl)ethane, 2,2-bis(4-hydroxyphenyl)propane (commonly known as bisphenol A), 2,2-bis(4-hydroxy-3-methylphenyl) propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl) oxide, bis(4-hydroxyphenyl) sulfide, bis(4-hydroxyphenyl) sulfoxide, bis(4-hydroxyphenyl) sulfone, bis(4-hydroxyphenyl) ketone, bis(4-hydroxyphenyl) ester, bis(4-hydroxy-3-methylphenyl) sulfide, 9,9-bis(4-hydroxyphenyl)fluorene, 9,9-bis(4-hydroxy-3-methylphenyl)fluorene, and the like can be mentioned. Preferred dihydric phenols are bis(4-hydroxyphenyl)alkanes. Among them, from the viewpoint of impact resistance, bisphenol A is particularly preferable and versatile.
In the invention, in addition to bisphenol A type polycarbonate resins, which are versatile polycarbonate-based resins, a special polycarbonate-based resin produced using other dihydric phenols can also be used as the component A. For example, a polycarbonate-based resin (homopolymer or copolymer) using, as part or all of the dihydric phenol component, 4,4'-(m-phenylenediisopropylidene)diphenol (hereinafter sometimes abbreviated as "BPM"), 1,1-bis(4-hydroxyphenyl)cyclohexane, 1,1-bis(4-hydroxyphenyl)-3,3,5-trimethylcyclohexane (hereinafter sometimes abbreviated as "Bis-TMC"), 9,9-bis(4-hydroxyphenyl)fluorene, or 9,9-bis(4-hydroxy-3-methylphenyl) fluorene (hereinafter sometimes abbreviated as "BCF") is appropriate for applications where the requirements for resistance to dimensional changes due to water absorption and form stability are particularly stringent. It is preferable that these non-BPA dihydric phenols are used in an amount of 5 mol% or more, particularly 10 mol% or more, of the entire dihydric phenol component constituting the polycarbonate-based resin. In particular, in the case where high rigidity and improved hydrolysis resistance are required, it is particularly favorable that the component A constituting the resin composition is any one of the following copolymerized polycarbonate-based resins (1) to (3).

(1) A copolymerized polycarbonate-based resin in which, in 100 mol% of the dihydric phenol component constituting the polycarbonate-based resin, BPM is 20 to 80 mol% (more favorably 40 to 75 mol%, and still more favorably 45 to 65 mol%), and BCF is 20 to 80 mol% (more favorably 25 to 60 mol%, and still more favorably 35 to 55 mol%).
(2) A copolymerized polycarbonate-based resin in which, in 100 mol% of the dihydric phenol component constituting the polycarbonate-based resin, BPA is 10 to 95 mol% (more favorably 50 to 90 mol%, and still more favorably 60 to 85

mol%), and BCF is 5 to 90 mol% (more favorably 10 to 50 mol%, and still more favorably 15 to 40 mol%).

(3) A copolymerized polycarbonate-based resin in which in 100 mol% of the dihydric phenol component constituting the polycarbonate-based resin, BPM is 20 to 80 mol% (more favorably 40 to 75 mol%, and still more favorably 45 to 65 mol%), and Bis-TMC is 20 to 80 mol% (more favorably 25 to 60 mol%, and still more favorably 35 to 55 mol%).

These special polycarbonate-based resins may be used alone, and it is also possible that two or more kinds are suitably mixed and used. In addition, it is also possible that they are mixed with a versatile bisphenol A type polycarbonate-based resin and used. The production methods for these special polycarbonate-based resins and their properties are described in detail, for example, in JPH06-172508A, JPH08-27370A, JP2001-55435A, JP2002-117580A, etc.

Incidentally, among the various polycarbonate-based resins described above, those whose water absorption rate and Tg (glass transition temperature) are made within the below ranges through the adjustment of copolymer composition, etc., have good hydrolysis resistance as polymers themselves and are also remarkably excellent in terms of low warpage after molding, and thus are particularly favorable in the fields where form stability is required.

(i) A polycarbonate-based resin having a water absorption rate of 0.05 to 0.15%, preferably 0.06 to 0.13%, and a Tg of 120 to 180°C, or

(ii) a polycarbonate-based resin having a Tg of 160 to 250°C, preferably 170 to 230°C, and having a water absorption rate of 0.10 to 0.30%, preferably 0.13 to 0.30%, and more preferably 0.14 to 0.27%.

Here, the water absorption rate of a polycarbonate-based resin is a value obtained by measuring the moisture content in a disk-shaped test piece, 45 mm in diameter and 3.0 mm in thickness, after being immersed in water at 23°C for 24 hours in accordance with ISO 62-1980. In addition, the Tg (glass transition temperature) is a value determined by differential scanning calorimeter (DSC) measurement in accordance with JIS K7121.

As the carbonate precursor, a carbonyl halide, a carbonic acid diester, a haloformate, or the like is used. Specifically, phosgene, diphenyl carbonate, dihaloformates of dihydric phenols, and the like can be mentioned.

In the production of a polycarbonate-based resin from the dihydric phenol and carbonate precursor by an interfacial polymerization method, a catalyst, a terminating agent, an antioxidizing agent for preventing the dihydric phenol from oxidation, and the like may be used as necessary. In addition, polycarbonate-based resins of the invention include a branched polycarbonate resin copolymerized with a trifunctional or higher polyfunctional aromatic compound, a polyester carbonate resin copolymerized with an aromatic or aliphatic (including alicyclic) difunctional carboxylic acid, a copolymerized polycarbonate resin copolymerized with a difunctional alcohol (including alicyclic), and a polyester carbonate resin copolymerized with such a difunctional carboxylic acid and a difunctional alcohol together. In addition, a mixture obtained by mixing two or more kinds of the obtained polycarbonate-based resins is also applicable.

A branched polycarbonate resin can impart anti-dripping performance or the like to the resin composition of the invention. As trifunctional or higher polyfunctional aromatic compounds used for such a branched polycarbonate resin, phloroglucine, phloroglucide, trisphenols such as 4,6-dimethyl-2,4,6-tris(4-hydroxydiphenyl)heptene-2,2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl) ethane, 2,6-bis(2-hydroxy-5-methylbenzyl)-4-methylphenol, and 4-{4-[1,1-bis(4-hydroxyphenyl)ethyl]benzene}-$\alpha,\alpha$-dimethylbenzylphenol, tetra (4-hydroxyphenyl) methane, bis(2,4-dihydroxyphenyl) ketone, and 1,4-bis(4,4-dihydroxytriphenylmethyl)benzene, as well as trimellitic acid, pyromellitic acid, benzophenonetetracarboxylic acid, acid chlorides thereof, and the like, can be mentioned. Among them, 1,1,1-tris(4-hydroxyphenyl)ethane and 1,1,1-tris(3,5-dimethyl-4-hydroxyphenyl)ethane are preferable, and 1,1,1-tris(4-hydroxyphenyl) ethane is particularly preferable.

The polyfunctional aromatic compound-derived structural unit in the branched polycarbonate resin is, in 100 mol% of the total of the dihydric phenol-derived structural unit and the polyfunctional aromatic compound-derived structural unit, preferably 0.01 to 1 mol%, more preferably 0.05 to 0.9 mol%, and still more preferably 0.05 to 0.8 mol%. In addition, particularly in the case of a melt transesterification method, a branched structural unit may be produced as a side reaction, and such a branched structural unit amount is also preferably 0.001 to 1 mol%, more preferably 0.005 to 0.9 mol%, and still more preferably 0.01 to 0.8 mol% in 100 mol% of the total with the dihydric phenol-derived structural unit. Incidentally, the proportion of this branched structure can be calculated by $^1$H-NMR measurement.

The aliphatic difunctional carboxylic acid is preferably an $\alpha,\omega$-dicarboxylic acid. As aliphatic difunctional carboxylic acids, linear saturated aliphatic dicarboxylic acids, such as sebacic acid (decanedioic acid), dodecanedioic acid, tetradecanedioic acid, octadecanedioic acid, and icosanedioic acid, and alicyclic dicarboxylic acids, such as cyclohexanedicarboxylic acid, can be mentioned as preferred examples. As difunctional alcohols, alicyclic diols are more favorable, and, for example, cyclohexanedimethanol, cyclohexanediol, tricyclodecane dimethanol, and the like are given as examples.

The reaction forms of an interfacial polymerization method, a melt transesterification method, a carbonate prepolymer solid-phase transesterification method, a ring-opening polymerization method for cyclic carbonate compounds, and the like, which are methods for producing the polycarbonate-based resin of the invention, are methods well known in various literatures and patent publications.

In the production of the polycarbonate resin composition of the invention, the viscosity average molecular weight (M) of the polycarbonate-based resin is not particularly limited, but is preferably $1.6 \times 10^4$ to $4.0 \times 10^4$, more preferably $1.7 \times 10^4$ to $3.5 \times 10^4$, and still more preferably $1.8 \times 10^4$ to $3.0 \times 10^4$. A polycarbonate-based resin having a viscosity average molecular weight of less than $1.6 \times 10^4$ may not provide good mechanical properties. Meanwhile, a resin composition obtained from a polycarbonate-based resin having a viscosity average molecular weight of more than $4.0 \times 10^4$ is inferior in flowability during injection molding and is, in this respect, inferior in versatility.

Incidentally, the polycarbonate-based resin may also be obtained by mixing resins whose viscosity average molecular weights are outside the above range. In particular, a polycarbonate-based resin whose viscosity average molecular weight is more than the above range ($5 \times 10^4$) provides the resin with improved entropy elasticity. As a result, good molding processability is exhibited in gas-assisted molding, which is sometimes used for molding a reinforced resin material into a structural member, and also in foam molding. Such improvement in molding processability is even better than in the case of the branched polycarbonate resin. As a more favorable mode, it is also possible to use, as the component A, a polycarbonate-based resin (component A-1) that includes a polycarbonate-based resin having a viscosity average molecular weight of $7 \times 10^4$ to $3 \times 10^5$ (component A-1-1) and an aromatic polycarbonate-based resin having a viscosity average molecular weight of $1 \times 10^4$ to $3 \times 10^4$ (component A-1-2) and has a viscosity average molecular weight of $1.6 \times 10^4$ to $3.5 \times 10^4$ (hereinafter sometimes referred to as "high molecular weight component-containing polycarbonate-based resin").

In this high molecular weight component-containing polycarbonate-based resin (component A-1), the molecular weight of the component A-1-1 is preferably $7 \times 10^4$ to $2 \times 10^5$, more preferably $8 \times 10^4$ to $2 \times 10^5$, still more preferably $1 \times 10^5$ to $2 \times 10^5$, and particularly preferably $1 \times 10^5$ to $1.6 \times 10^5$. In addition, the molecular weight of the component A-1-2 is preferably $1 \times 10^4$ to $2.5 \times 10^4$, more preferably $1.1 \times 10^4$ to $2.4 \times 10^4$, still more preferably $1.2 \times 10^4$ to $2.4 \times 10^4$, and particularly preferably $1.2 \times 10^4$ to $2.3 \times 10^4$.

The high molecular weight component-containing polycarbonate-based resin (component A-1) can be obtained by mixing the component A-1-1 and the component A-1-2 in various proportions and adjusting the molecular weight to satisfy the predetermined range. It is preferable that, in 100 wt% of the component A-1, the component A-1-1 is 2 to 40 wt%, it is more preferable that the component A-1-1 is 3 to 30 wt%, it is still more preferable that the component A-1-1 is 4 to 20 wt%, and it is particularly preferable that the component A-1-1 is 5 to 20 wt%.

In addition, as methods for preparing the component A-1, (1) a method in which a component A-1-1 and a component A-1-2 are independently polymerized and then mixed, (2) a method in which, using a method in which, as typified by the method disclosed in JPH05-306336A, an aromatic polycarbonate resin that shows a plurality of polymer peaks in the GPC molecular weight distribution chart is produced in the same system, the polycarbonate-based resin is produced to satisfy the conditions of the component A-1 of the invention, (3) a method in which a polycarbonate-based resin obtained by this production method (production method (2)) is mixed with a separately produced component A-1-1 and/or component A-1-2, and the like can be mentioned.

For the viscosity average molecular weight in the context of the invention, first, the specific viscosity ($\eta_{SP}$) calculated by the following formula is determined from a solution of 0.7 g of a polycarbonate-based resin dissolved in 100 ml of methylene chloride at 20°C using an Ostwald viscometer:

$$\text{Specific viscosity } (\eta_{SP}) = (t - t_0)/t_0$$

[$t_0$ is the number of seconds for methylene chloride to fall, and t is the number of seconds for the sample solution to fall]. From the determined specific viscosity ($\eta_{SP}$), the viscosity average molecular weight M is calculated by the following formula.

$\eta_{SP}/c = [\eta] + 0.45 \times [\eta]^2 c$ (in which $[\eta]$ is intrinsic viscosity)

$$[\eta] = 1.23 \times 10^{-4} M^{0.83}$$

$c = 0.7$

It is also possible to use a polycarbonate-polydiorganosiloxane copolymer resin as the polycarbonate-based resin of the invention. It is preferable that the polycarbonate-polydiorganosiloxane copolymer resin is a copolymer resin prepared by copolymerizing a dihydric phenol represented by the following general formula (1) and a hydroxyaryl-terminated polydiorganosiloxane represented by the following general formula (3).

[Chemical formula 1]

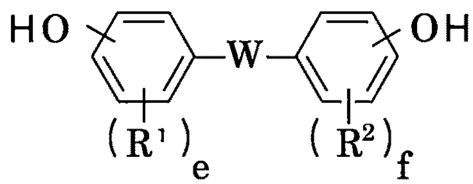

(1)

[In the above general formula (1), $R^1$ and $R^2$ each independently represent a group selected from the group consisting of a hydrogen atom, a halogen atom, an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group, and a carboxy group, with the proviso that when there are a plurality of each, they may be the same or different, e and f are each an integer of 1 to 4, and W is a single bond or at least one group selected from the group consisting of groups represented by the following general formula (2).]

[Chemical formula 2]

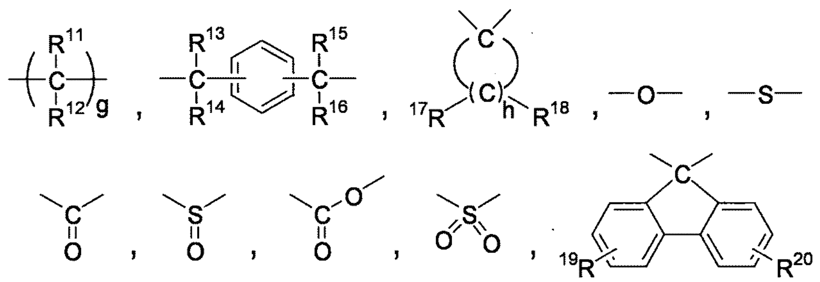

(2)

[In the above general formula (2), $R^{11}$, $R^{12}$, $R^{13}$, $R^{14}$, $R^{15}$, $R^{16}$, $R^{17}$, and $R^{18}$ each independently represent a group selected from the group consisting of a hydrogen atom, an alkyl group having 1 to 18 carbon atoms, an aryl group having 6 to 14 carbon atoms, and an aralkyl group having 7 to 20 carbon atoms, $R^{19}$ and $R^{20}$ each independently represent a group selected from the group consisting of a hydrogen atom, a halogen atom, an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group, and a carboxy group, with the proviso that when there are a plurality of each, they may be the same or different, g is an integer of 1 to 10, and h is an integer of 4 to 7.]

[Chemical formula 3]

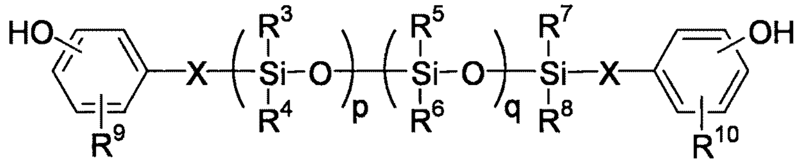

(3)

[In the above general formula (3), $R^3$, $R^4$, $R^5$, $R^6$, $R^7$, and $R^8$ each independently represent a hydrogen atom, an alkyl group having 1 to 12 carbon atoms, or a substituted or unsubstituted aryl group having 6 to 12 carbon atoms, $R^9$ and $R^{10}$ each independently represent a hydrogen atom, a halogen atom, an alkyl group having 1 to 10 carbon atoms, or an alkoxy group having 1 to 10 carbon atoms, p is a natural number, q is 0 or a natural number, and p + q is a natural number of

10 to 300. X is a divalent aliphatic group having 2 to 8 carbon atoms.]

As dihydric phenols (I) represented by general formula (1), for example, 4,4'-dihydroxybiphenyl, bis(4-hydroxyphenyl) methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl) propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1, 4-bis {2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol, 1,3-bis(4-hydroxyphenyl)-5,7-dimethyladamantane, and the like can be mentioned.

Among them, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, and 1,4-bis{2-(4-hydroxyphenyl)propyl}benzene are preferable, and, in particular, 2,2-bis(4-hydroxyphenyl)propane, 1,1-bis(4-hydroxyphenyl)cyclohexane (BPZ), 4,4'-sulfonyldiphenol, and 9,9-bis(4-hydroxy-3-methylphenyl)fluorene are preferable. Among them, 2,2-bis(4-hydroxyphenyl)propane, which is excellent in strength and has good durability, is most favorable. In addition, they may be used alone, and it is also possible to use a combination of two or more kinds.

As hydroxyaryl-terminated polydiorganosiloxanes represented by the above general formula (3), the compounds shown below are favorably used, for example.

[Chemical formula 4]

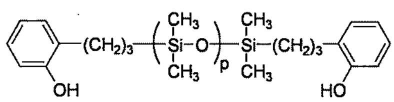
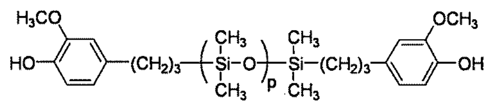
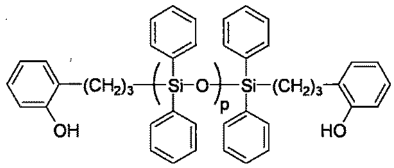
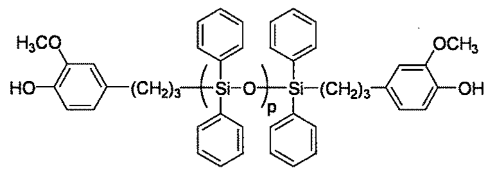
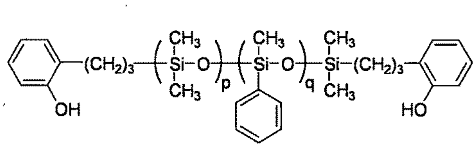
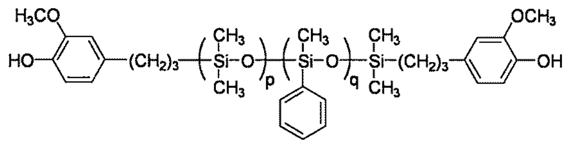
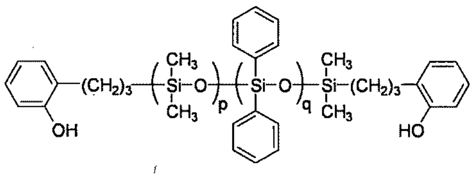
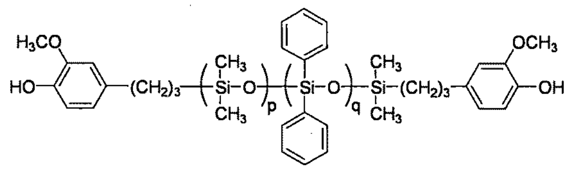

The hydroxyaryl-terminated polydiorganosiloxane (II) is easily produced by subjecting a phenol having an olefinically unsaturated carbon-carbon bond, favorably vinylphenol, 2-allylphenol, isopropenylphenol, or 2-methoxy-4-allylphenol, to a hydrosilylation reaction at the end of the polysiloxane chain having a predetermined degree of polymerization. Among them, (2-allylphenol)-terminated polydiorganosiloxane and (2-methoxy-4-allylphenol)-terminated polydiorganosiloxane are preferable, and, in particular, (2-allylphenol)-terminated polydimethylsiloxane and (2-methoxy-4-allylphenol)-terminated polydimethylsiloxane are preferable. The hydroxyaryl-terminated polydiorganosiloxane (II) preferably has a molecular weight distribution (Mw/Mn) of 3 or less. For the exhibition of even better low outgassing properties during high-temperature molding and low-temperature impact properties, the molecular weight distribution

(Mw/Mn) is more preferably 2.5 or less, and still more preferably 2 or less. When the distribution is more than the upper limit of this favorable range, the outgassing amount during high-temperature molding increases, and also the low-temperature impact properties may be inferior.

In addition, in order to achieve a high level of impact resistance, the appropriate degree of diorganosiloxane polymerization (p + q) of the hydroxyaryl-terminated polydiorganosiloxane (II) is 10 to 300. The degree of diorganosiloxane polymerization (p + q) is preferably 10 to 200, more preferably 12 to 150, and still more preferably 14 to 100. When the polymerization degree is less than the lower limit of this favorable range, the impact resistance, which is a characteristic of a polycarbonate-polydiorganosiloxane copolymer, is not effectively exhibited, while a polymerization degree of more than the upper limit of this favorable range leads to an appearance defect.

The polydiorganosiloxane content based on the overall weight of the polycarbonate-polydiorganosiloxane copolymer resin used as the component A is preferably 0.1 to 50 wt%. The polydiorganosiloxane component content is more preferably 0.5 to 30 wt%, and still more preferably 1 to 20 wt%. A content of not less than the lower limit of this favorable range leads to excellent impact resistance and flame retardancy, while a content of not more than the upper limit of this favorable range makes it easier to obtain a stable appearance that is less likely to be affected by the molding conditions. The degree of polydiorganosiloxane polymerization and the polydiorganosiloxane content can be calculated by $^1$H-NMR measurement.

In the invention, it is possible to use only a single kind of hydroxyaryl-terminated polydiorganosiloxane (II), and it is also possible to use two or more kinds.

In addition, without interfering with the invention, comonomers other than the dihydric phenol (I) and the hydroxyaryl-terminated polydiorganosiloxane (II) may also be used together within a range of 10 wt% or less based on the overall weight of the copolymer.

In the invention, a mixed solution containing an oligomer having a terminal chloroformate group is prepared in advance through a reaction between a dihydric phenol (I) and a carbonic acid ester-forming compound in a mixed solution of a water-insoluble organic solvent and an aqueous alkali solution.

In the formation of an oligomer of the dihydric phenol (I), the dihydric phenol (I) used in the method of the invention may be fully converted into an oligomer at once, or it is also possible that a portion thereof is used as a post-added monomer and added as a reaction raw material to the subsequent interfacial polycondensation reaction. A post-added monomer is added in order to allow the subsequent polycondensation reaction to quickly proceed, and there is no need to bother adding it if not unnecessary.

The technique for this oligomer formation reaction is not particularly limited, but a technique in which the reaction is performed in a solvent in the presence of an acid binder is usually favorable.

The proportion of the carbonic acid ester-forming compound used may be suitably adjusted considering the stoichiometric ratio (equivalent) of the reaction. In addition, in the case where a gaseous carbonic acid ester-forming compound such as phosgene is used, a method in which the compound is blown into the reaction system can be favorably employed.

As the acid binder, for example, alkali metal hydroxides such as sodium hydroxide and potassium hydroxide, alkali metal carbonates such as sodium carbonate and potassium carbonate, organic bases such as pyridine, mixtures thereof, and the like are used. The proportion of the acid binder used may also be, as above, suitably specified considering the stoichiometric ratio (equivalent) of the reaction. Specifically, it is preferable to use two equivalents, or a slight excess, of the acid binder with respect to the number of moles of the divalent phenol (I) used to form an oligomer (one mole is usually equal to two equivalents).

As the solvent, various solvents inert to the reaction, such as those used in the production of known polycarbonate-based resins, may be used alone or as a mixed solvent. As typical examples, for example, hydrocarbon solvents such as xylene, halogenated hydrocarbon solvents such as methylene chloride and chlorobenzene, and the like can be mentioned. It is particularly favorable to use a halogenated hydrocarbon solvent such as methylene chloride.

The reaction pressure for oligomer formation is not particularly limited, and may be normal pressure, increased pressure, or reduced pressure, but it is usually advantageous to perform the reaction under normal pressure. The reaction temperature is selected from the range of -20 to 50°C, and, because polymerization is often accompanied by the generation of heat, it is desirable to perform cooling with water or ice. The reaction time depends on other conditions and is not necessarily specified, but is usually 0.2 to 10 hours. The pH range of the oligomer formation reaction is the same as the known interfacial reaction conditions, and the adjustment is performed to always make the pH 10 or higher.

In the invention, after a mixed solution containing a dihydric phenol (I) oligomer having a terminal chloroformate group is thus obtained, while stirring the mixed solution, a hydroxyaryl-terminated polydiorganosiloxane (II) represented by general formula (3), which has been highly purified to a molecular weight distribution (Mw/Mn) of 3 or less, is added to the divalent phenol (I), and the hydroxyaryl-terminated polydiorganosiloxane (II) and the oligomer are subjected to interfacial polycondensation, thereby giving a polycarbonate-polydiorganosiloxane copolymer.

[Chemical formula 5]

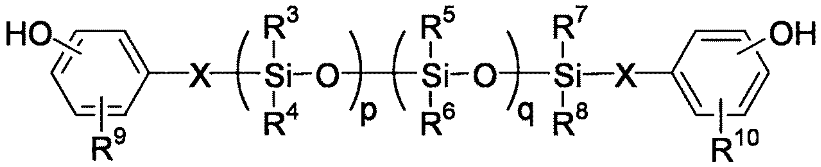

(3)

(In the above general formula (3), $R^3$, $R^4$, $R^5$, $R^6$, $R^7$, and $R^8$ each independently represent a hydrogen atom, an alkyl group having 1 to 12 carbon atoms, or a substituted or unsubstituted aryl group having 6 to 12 carbon atoms, $R^9$ and $R^{10}$ each independently represent a hydrogen atom, a halogen atom, an alkyl group having 1 to 10 carbon atoms, or an alkoxy group having 1 to 10 carbon atoms, p is a natural number, q is 0 or a natural number, and p + q is a natural number of 10 to 300. X is a divalent aliphatic group having 2 to 8 carbon atoms.)

When the interfacial polycondensation reaction is performed, an acid binder may be suitably added considering the stoichiometric ratio (equivalent) of the reaction. As the acid binder, for example, alkali metal hydroxides such as sodium hydroxide and potassium hydroxide, alkali metal carbonates such as sodium carbonate and potassium carbonate, organic bases such as pyridine, mixtures thereof, and the like are used. Specifically, in the case where the hydroxyaryl-terminated polydiorganosiloxane (II) used, or a portion of the dihydric phenol (I) as described above, is added as a post-added monomer at this reaction stage, it is preferable to use two equivalents, or an excess, of alkali with respect to the total number of moles of the post-added divalent phenol (I) and the hydroxyaryl-terminated polydiorganosiloxane (II) (one mole is usually equal to two equivalents).

Polycondensation though the interfacial polycondensation reaction between the dihydric phenol (I) oligomer and the hydroxyaryl-terminated polydiorganosiloxane (II) is performed by vigorously stirring the above mixture.

In such a polymerization reaction, a terminal stopper or a molecular weight regulator is usually used. As the terminal stopper, a compound having a monohydric phenolic hydroxyl group can be mentioned, and, in addition to usual phenol, p-tert-butylphenol, p-cumylphenol, tribromophenol, and the like, examples also include long-chain alkylphenols, aliphatic carboxylic acid chlorides, aliphatic carboxylic acids, hydroxybenzoic acid alkyl esters, hydroxyphenyl alkyl acid esters, and alkyl ether phenols. The amount thereof used is within a range of 100 to 0.5 mol, preferably 50 to 2 mol, per 100 mol of all the dihydric phenol-based compounds used, and it is naturally possible to use two or more compounds together.

In order to accelerate the polycondensation reaction, a catalyst, such as triethylamine or a like tertiary amine or a quaternary ammonium salt, may be added.

The reaction time for this polymerization reaction is preferably 30 minutes or more, and still more preferably 50 minutes or more. If desired, a small amount of antioxidant such as sodium sulfite or hydrosulfide may be added.

A branching agent can be used together with the above dihydric phenol-based compound to give a branched polycarbonate-polydiorganosiloxane. As trifunctional or higher polyfunctional aromatic compounds used for such a branched polycarbonate-polydiorganosiloxane copolymer resin, phloroglucine, phloroglucide, trisphenols such as 4,6-dimethyl-2,4,6-tris(4-hydroxydiphenyl)heptene-2,2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl) ethane, 2,6-bis(2-hydroxy-5-methylbenzyl)-4-methylphenol, and 4-{4-[1,1-bis(4-hydroxyphenyl)ethyl]benzene}-α,α-dimethylbenzylphenol, tetra (4-hydroxyphenyl) methane, bis(2,4-dihydroxyphenyl) ketone, and 1,4-bis(4,4-dihydroxytriphenylmethyl)benzene, as well as trimellitic acid, pyromellitic acid, benzophenonetetracarboxylic acid, acid chlorides thereof, and the like, can be mentioned. Among them, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable. The proportion of the polyfunctional compound in the branched polycarbonate-polydiorganosiloxane copolymer resin is, based on the overall amount of the polycarbonate-polydiorganosiloxane copolymer resin, preferably 0.001 to 1 mol%, more preferably 0.005 to 0.9 mol%, still more preferably 0.01 to 0.8 mol%, and particularly preferably 0.05 to 0.4 mol%. Incidentally, this branched structure amount can be calculated by $^1$H-NMR measurement.

The reaction pressure may be reduced pressure, normal pressure, or increased pressure, but the reaction can usually be favorably performed at normal pressure or at around the pressure of the reaction system itself. The reaction temperature is selected from the range of -20 to 50°C, and, because polymerization is often accompanied by the generation of heat, it is desirable to perform cooling with water or ice. The reaction time varies depending on other conditions such as the reaction temperature and is not necessarily specified, but is usually 0.5 to 10 hours.

In some cases, the obtained polycarbonate-polydiorganosiloxane copolymer resin can be suitably subjected to a physical treatment (mixing, fractionation, etc.) and/or a chemical treatment (polymer reaction, crosslinking treatment, partial decomposition treatment, etc.) to provide the polycarbonate-polydiorganosiloxane copolymer resin with the desired reduced viscosity [$\eta_{SP}$/c].

The obtained reaction product (crude product) can be subjected to various post-treatments, such as known separation and purification processes, and recovered as a polycarbonate-polydiorganosiloxane copolymer resin with the desired purity (degree of purification).

The average size of the polydiorganosiloxane domains in the polycarbonate-polydiorganosiloxane copolymer resin molded article is preferably within a range of 1 to 40 nm. This average size is more preferably 1 to 30 nm, and still more preferably 5 to 25 nm. When the average size is less than the lower limit of this favorable range, impact resistance and flame retardancy may not be fully exhibited, while when it is more than the upper limit of this favorable range, impact resistance may not be stably exhibited. As a result, a polycarbonate resin composition excellent in impact resistance and appearance is provided.

The average domain size of the polydiorganosiloxane domains in the polycarbonate-polydiorganosiloxane copolymer resin molded article in the invention was evaluated by small angle X-ray scattering (SAXS). Small angle X-ray scattering is a method for measuring diffuse scattering/diffraction that occurs in a small-angle region within a scattering angle ($2\theta$) < 10°. In this small angle X-ray scattering, when regions with a size of about 1 to 100 nm having different electron densities are present in a material, the diffuse scattering of X-rays is measured from the difference in electron density. Based on this scattering angle and scattering intensity, the particle size of the measurement object is determined. In the case of a polycarbonate-polydiorganosiloxane copolymer resin having an agglomerated structure with the polydiorganosiloxane domains dispersed in the polycarbonate polymer matrix, the diffuse scattering of X-rays is caused by the electron density difference between the polycarbonate matrix and the polydiorganosiloxane domains. The scattering intensity I at each scattering angle ($2\theta$) within a range where the scattering angle ($2\theta$) is less than 10° is measured to measure the small angle X-ray scattering profile, and, assuming that the polydiorganosiloxane domains are spherical domains, and that there is a variation in particle size distribution, simulation is performed based on a hypothetical particle size and a hypothetical particle size distribution model using commercially available analysis software to determine the average size of the polydiorganosiloxane domains. Small angle X-ray scattering allows the average size of polydiorganosiloxane domains dispersed in a polycarbonate polymer matrix, which cannot be accurately measured by observation under a transmission electron microscope, to be measured accurately, simply, and with good reproducibility. "Average domain size" means the number average of the individual domain sizes.

The term "average domain size" used in connection with the invention refers to a measured value obtained by measuring a **1.0-mm-thick** portion of a three-stage plate prepared by the method described in Examples using this small angle X-ray scattering. In addition, the analysis was performed using an isolated particle model that does not take into account interparticle interactions (interparticle interference).

<Component B: ABS Resin>

The resin composition of the invention contains an ABS resin as a component B. An ABS resin is a copolymer obtained by graft-polymerizing acrylonitrile and styrene onto polybutadiene. As the styrene, styrene and $\alpha$-methylstyrene can be particularly preferably used. The proportion of the component grafted onto polybutadiene is preferably 95 to 20 wt%, particularly preferably 90 to 50 wt%, in 100 wt% of the ABS resin component. Further, it is preferable that acrylonitrile is 5 to 50 wt%, while styrene is 95 to 50 wt%, in 100 wt% of the total amount of acrylonitrile and styrene. Further, as part of the components graft-polymerized onto polybutadiene, methyl (meth)acrylate, ethyl acrylate, maleic anhydride, N-substituted maleimide, and the like may also be mixed and used, and the content thereof is preferably 15 wt% or less in the ABS resin component. Further, as the initiator, chain transfer agent, emulsifier, and the like used in the reaction, various conventionally known ones can be used as necessary. In the ABS resin of the invention, the particle size of polybutadiene is preferably 0.1 to 5.0 $\mu$m, more preferably 0.2 to 3.0 $\mu$m, and particularly preferably 0.3 to 1.5 $\mu$m. With respect to the particle size distribution of polybutadiene, any of those with a single distribution and those having two or more peaks can be used. Further, also with respect to the morphology, those having particles with a single phase and those containing an occlusion phase around the particles and thus having a salami structure are possible. In addition, it has been conventionally well known that an ABS resin contains a copolymer composed of acrylonitrile and styrene that are not grafted onto diene-based rubber components, and the ABS resin of the invention may also contain free polymer components generated during such polymerization. The reduced viscosity (30°C) of such a copolymer composed of free acrylonitrile and styrene is preferably 0.2 to 1.0 dl/g, and more preferably 0.3 to 0.7 dl/g. In addition, the proportion of the grafted acrylonitrile and styrene relative to polybutadiene is, in terms of graft rate (wt%), preferably 20 to 200%, and more preferably 20 to 70%. Such an ABS resin may be produced by any of bulk polymerization, suspension polymerization, and emulsion polymerization methods, but one produced by emulsion polymerization is particularly preferable. In addition, the copolymerization method may also be one-stage copolymerization or multi-stage copolymerization. In addition, a blend of the ABS resin obtained by such a production method with a vinyl compound polymer obtained by separately copolymerizing acrylonitrile and styrene can also be preferably used.

The content of component B is, in 100 parts by weight of the total of the component A and the component B, 10 to 80 parts by weight, preferably 15 to 70 parts by weight, and more preferably 20 to 60 parts by weight. In the case where the

content of component B is less than 10 parts by weight, this leads to poor fluidity, while a content of more than 80 parts by weight leads to reduced heat resistance.

In the component B, the $SO_4^{2-}$ content is 1 ppm or more, and the $PO_4^{3-}$ content is less than 1.5 ppm. The $SO_4^{2-}$ content is preferably 1.5 ppm or more, and more preferably 2 ppm or more. Meanwhile, the $PO_4^{3-}$ content is preferably less than 1.0 ppm, and more preferably less than 0.5 ppm. In the case where the $SO_4^{2-}$ and $PO_4^{3-}$ contents are outside the ranges, the linear expansion coefficient increases. Incidentally, the upper limit of the $SO_4^{2-}$ content is not particularly set, but is preferably 10 ppm or less, and the lower limit of the $PO_4^{3-}$ content is not particularly set either, but is preferably 0.005 ppm or more. The $SO_4^{2-}$ and $PO_4^{3-}$ contents are measured using an ion chromatograph according to the following procedure. 1 g of an ABS resin sample is dissolved in 100 ml of methylene chloride, and then 20 ml of water is added, followed by shaking. Subsequently, the mixture is left to stand for a while, and the aqueous layer is recovered, followed by ion chromatography measurement. For the ion chromatography measurement, DIONEX Ion Chromatograph: Integration HPIC RF-IC manufactured by Nippon Dionex K.K., can be used.

<Component C: Silicate Mineral>

The resin composition of the invention contains a silicate mineral as a component C. As the silicate mineral, commonly known silicate minerals such as wollastonite, kaolin, mica, and talc can be used. The silicate mineral used as the component C of the invention is a mineral composed at least of a metal oxide component and a $SiO_2$ component, and orthosilicate, disilicate, cyclic silicate, chain silicate, and the like are favorable. Silicate minerals are in crystalline state, and the crystals can also be in various shapes, such as fibrous or plate-like.

The silicate mineral may be any compound selected from a complex oxide, an oxyacid salt (composed of an ionic lattice), and a solid solution. Further, the composite oxide may be a combination of two or more kinds of single oxides, or a combination of two or more kinds of single oxides and oxyacid salts. Further, the solid solution may also be a solid solution of two or more kinds of metal oxides or a solid solution of two or more kinds of oxyacid salts. The silicate mineral may be a hydrate. The form of crystalline water in the hydrate may be any of those inserted as Si-OH as hydrogen silicate ions, those ionically inserted as hydroxide ions ($OH^-$) into metal cations, and those inserted as $H_2O$ molecules into gaps in the structure.

As the silicate mineral, artificially synthesized products corresponding to natural products can also be used. As artificially synthesized products, silicate minerals obtained by conventionally known various methods, such as various synthesis methods using a solid-state reaction, a hydrothermal reaction, and an ultra-high pressure reaction, for example, can be used.

As specific examples of silicate minerals in various metal oxide components (MO), those shown below can be mentioned. Here, the notation in parentheses is the name of a mineral or the like that contains the silicate mineral as a main component, indicating that the compound in parentheses can be used as the metal salt given as an example.

As those containing $K_2O$ in their composition, $K_2O \cdot SiO_2$, $K_2O \cdot 4SiO_2 \cdot H_2O$, $K_2O \cdot Al_2O_3 \cdot 2SiO_2$ (kalsilite), $K_2O \cdot Al_2O_3 \cdot 4SiO_2$ (leucite), $K_2O \cdot Al_2O_3 \cdot 6SiO_2$ (orthoclase), and the like can be mentioned.

As those containing $Na_2O$ in their composition, $Na_2O \cdot SiO_2$ and its hydrates, $Na_2O \cdot 2SiO_2$, $2Na_2O \cdot SiO_2$, $Na_2O \cdot 4SiO_2$, $Na_2O \cdot 3SiO_2 \cdot 3H_2O$, $Na_2O \cdot Al_2O_3 \cdot 2SiO_2$, $Na_2O \cdot Al_2O_3 \cdot 4SiO_2$ (jadeite), $2Na_2O \cdot 3CaO \cdot 5SiO_2$, $3Na_2O \cdot 2CaO \cdot 5SiO_2$, $Na_2O \cdot Al_2O_3 \cdot 6SiO_2$ (albite), and the like can be mentioned.

As those containing $Li_2O$ in their composition, $Li_2O \cdot SiO_2$, $2Li_2O \cdot SiO_2$, $Li_2O \cdot SiO_2 \cdot H_2O$, $3Li_2O \cdot 2SiO_2$, $Li_2O \cdot Al_2O_3 \cdot 4SiO_2$ (petalite), $Li_2O \cdot Al_2O_3 \cdot 2SiO_2$ (eucryptite), $Li_2O \cdot Al_2O_3 \cdot 4SiO_2$ (spodumene), and the like can be mentioned.

As those containing BaO in their composition, $BaO \cdot SiO_2$, $2BaO \cdot SiO_2$, $BaO \cdot Al_2O_3 \cdot 2SiO_2$ (celsian), $BaO \cdot TiO_2 \cdot 3SiO_2$ (bentonite), and the like can be mentioned.

As those containing CaO in their composition, $3CaO \cdot SiO_2$ (alite, cement clinker mineral), $2CaO \cdot SiO_2$ (belite, cement clinker mineral), $2CaO \cdot MgO \cdot 2SiO_2$ (akermanite), $2CaO \cdot Al_2O_3 \cdot SiO_2$ (gehlenite), a solid solution of akermanite and gehlenite (melilite), $CaO \cdot SiO_2$ (wollastonite (including both $\alpha$-type and $\beta$-type)), $CaO \cdot MgO \cdot 2SiO_2$ (diopside), $CaO \cdot MgO \cdot SiO_2$ (ash forsterite), $3CaO \cdot MgO \cdot 2SiO_2$ (merwinite), $CaO \cdot Al_2O_3 \cdot 2SiO_2$ (anorthite), $5CaO \cdot 6SiO_2 \cdot 5H_2O$ (tobermorite, also $5CaO \cdot 6SiO_2 \cdot 9H_2O$, etc.) and like tobermorite group hydrates, $2CaO \cdot SiO \cdot H_2O$ (hillebrandite) and like wollastonite group hydrates, $6CaO \cdot 6SiO_2 \cdot H_2O$ (xonotlite) and like xonotlite group hydrates, $2CaO \cdot SiO_2 \cdot 2H_2O$ (gyrolite) and like gyrolite group hydrates, $CaO \cdot Al_2O_3 \cdot 2SiO_2 \cdot H_2O$ (lawsonite), $CaO \cdot FeO \cdot 2SiO_2$ (hedenbergite), $3CaO \cdot 2SiO_2$ (rankinite), $3CaO \cdot Al_2O_3 \cdot 3SiO_2$ (grossular), $3CaO \cdot Fe_2O_3 \cdot 3SiO_2$ (andradite), and $6CaO \cdot 4Al_2O_3 \cdot FeO \cdot SiO_2$ (pleochroite), as well as clinozoisite, piedmontite, allanite, vesuvianite, agnite, scawtite, augite, and the like, can be mentioned.

Further, as a silicate mineral containing CaO in its composition, Portland cement can be mentioned. The kind of Portland cement is not particularly limited, and any kind, including ordinary, early strength, ultra-early strength, medium heat, sulfate resistant, white, etc., can be used. Further, various blended cements, such as blast furnace cement, silica cement, and fly ash cement, can also be used as the component C.

As other silicate minerals containing CaO in their composition, blast furnace slag, ferrite, and the like can be mentioned.

As those containing ZnO in their composition, $ZnO \cdot SiO_2$, $2ZnO \cdot SiO_2$ (troostite), $4ZnO \cdot 2SiO_2 \cdot H_2O$ (hemimorphite), and the like can be mentioned.
As those containing MnO in their composition, $MnO \cdot SiO_2$, $2MnO \cdot SiO_2$, $CaO \cdot 4MnO \cdot 5SiO_2$ (rhodonite), coesrite, and the like can be mentioned.
As those containing FeO in their composition, $FeO \cdot SiO_2$ (ferrosilite), $2FeO \cdot SiO_2$ (fayalite), $3FeO \cdot Al_2O_3 \cdot 3SiO_2$ (almandine), $2CaO \cdot SFeO \cdot 8SiO_2 \cdot H_2O$ (ferro-actinolite), and the like can be mentioned.
As those containing CoO in their composition, $CoO \cdot SiO_2$, $2CoO \cdot SiO_2$, and the like can be mentioned.
As those containing MgO in their composition, $MgO \cdot SiO_2$ (steatite, enstatite), $2MgO \cdot SiO_2$ (forsterite), $3MgO \cdot Al_2O_3 \cdot 3SiO_2$ (pyrope), $2MgO \cdot 2Al_2O_3 \cdot 5SiO_2$ (cordierite), $2MgO \cdot 3SiO_2 \cdot 5H_2O$, $3MgO \cdot 4SiO_2 \cdot H_2O$ (talc), $5MgO \cdot 8SiO_2 \cdot 9H_2O$ (atapulgite), $4MgO \cdot 6SiO_2 \cdot 7H_2O$ (sepiolite), $3MgO \cdot 2SiO_2 \cdot 2H_2O$ (chrysolite), $5MgO \cdot 2CaO \cdot 8SiO_2 \cdot H_2O$ (tremelite), $5MgO \cdot Al_2O_3 \cdot 3SiO_2 \cdot 4H_2O$ (chlorite), $K_2O \cdot 6MgO \cdot Al_2O_3 \cdot 6SiO_2 \cdot 2H_2O$ (phlogovite), and $Na_2O \cdot 3MgO \cdot 3Al_2O_3 \cdot 8SiO_2 \cdot H_2O$ (glaucophane), as well as magnesium tourmaline, anthophyllite, cummingtonite, vermiculite, smectite, and the like, can be mentioned.
As those containing $Fe_2O_3$ in their composition, $Fe_2O_3 \cdot SiO_2$ and the like can be mentioned.
As those containing $ZrO_2$ in their composition, $ZrO_2 \cdot SiO_2$ (zircon), AZS refractories, and the like can be mentioned.
As those containing $Al_2O_3$ in their composition, $Al_2O_3 \cdot SiO_2$ (sillimanite, andalusite, kyanite), $2Al_2O_3 \cdot SiO_2$, $Al_2O_3 \cdot 3SiO_2$, $3Al_2O_3 \cdot 2SiO_2$ (mullite), $Al_2O_3 \cdot 2SiO_2 \cdot 2H_2O$ (kaolinite), $Al_2O_3 \cdot 4SiO_2 \cdot H_2O$ (pyrophyllite), $Al_2O_3 \cdot 4SiO_2 \cdot H_2O$ (bentonite), $K_2O \cdot 3Na_2O \cdot 4Al_2O_3 \cdot 8SiO_2$ (nepheline), $K_2O \cdot 3Al_2O_3 \cdot 6SiO_2 \cdot 2H_2O$ (muscovite, sericite), and $K_2O \cdot 6MgO \cdot Al_2O_3 \cdot 6SiO_2 \cdot 2H_2O$ (phlogovite), as well as various zeolites, fluorphlogopite, biotite, and the like, can be mentioned.
Among the above silicate minerals, mica, talc, and wollastonite are particularly favorable, and it is more preferable to use one or more silicate minerals including talc.

(Talc)

Talc used in the invention is, in terms of chemical composition, hydrous magnesium silicate, and is commonly represented by the chemical formula $4SiO_2 \cdot 3MgO \cdot 2H_2O$. It is usually flake-like particles with a layered structure, and its composition is composed of approximately 56 to 65 wt% $SiO_2$, 28 to 35 wt% MgO, and about 5 wt% $H_2O$. As other minor components, 0.03 to 1.2 wt% $Fe_2O_3$, 0.05 to 1.5 wt% $Al_2O_3$, 0.05 to 1.2 wt% CaO, 0.2 wt% or less $K_2O$, 0.2 wt% or less $Na_2O$, and the like are contained. The particle size of talc is preferably such that the average particle size measured by a precipitation method is within a range of 0.1 to 15 μm (more preferably 0.2 to 12 μm, still more preferably 0.3 to 10 μm, and particularly preferably 0.5 to 5 μm). Further, it is particularly favorable to use talc having a bulk density of 0.5 ($g/cm^3$) or more as a raw material. The average particle size of talc refers to D50 (median diameter of particle size distribution) measured by an X-ray transmission method, which is a liquid-phase precipitation method. As a specific example of an apparatus for performing this measurement, Sedigraph 5100 manufactured by Micromeritics can be mentioned, for example.
In addition, the production method for grinding talc from ore is not particularly limited, and axial flow milling, annular milling, roll milling, ball milling, jet milling, container-rotating compression shear milling, and the like can be used. Further, talc after grinding is favorably classified using various classifiers to have a uniform particle size distribution. Classifiers are not particularly limited, and impactor type inertial force classifiers (variable impactor, etc.), Coanda effect-based inertial force classifiers (elbow jet, etc.), centrifugal field classifiers (multi-stage cyclone, MicroPlex, dispersion separator, AccuCut, turbo classifier, TurboPlex, micron separator, super separator, etc.), and the like can be mentioned. Further, talc is preferably in an agglomerated state for the ease of handling and the like. Examples of such production methods include a method through degassing and compressing, a method through compressing using a sizing agent, and the like. A method through degassing and compression is simple and does not allow unnecessary sizing agent resin components to be mixed into the resin composition of the invention, and thus is particularly preferable.

(Mica)

As mica, one having an average particle size of 10 to 100 μm as measured by a microtrack laser diffraction method can be preferably used. The average particle size is more preferably 20 to 50 μm. When the average particle size of mica is less than 10 μm, the improving effect on rigidity may not be sufficient, while also when it is more than 100 μm, the improvement in rigidity may not be sufficient, and mechanical strength, such as impact properties, may also significantly decrease, which is undesirable. Mica having a thickness of 0.01 to 1 μm as actually measured by observation under an electron microscope can be preferably used. The thickness is more preferably 0.03 to 0.3 μm. The aspect ratio used is preferably 5 to 200, and more preferably 10 to 100. In addition, the mica used is preferably muscovite mica, which has a Mohs hardness of about 3. Compared with other kinds of mica such as phlogovite, muscovite mica can achieve higher rigidity and higher strength and solves the problems of the invention at a higher level. In addition, as the method for grinding

mica, production by either a dry grinding method or a wet grinding method is possible. The dry grinding method is less expensive and more common, while the wet grinding method is effective in grinding mica more thinly and finely, resulting in a greater improving effect on the rigidity of the resin composition.

(Wollastonite)

The fiber diameter of wollastonite is preferably 0.1 to 10 μm, more preferably 0.1 to 5 μm, and still more preferably 0.1 to 3 μm. In addition, the aspect ratio (average fiber length/average fiber diameter) is preferably 3 or more. The upper limit of the aspect ratio can be 30 or less. Here, for the fiber diameter, the reinforcing filler is observed under an electron microscope, the diameter of each fiber is determined, and, from the measured values, the number average fiber diameter is calculated. The reason why an electron microscope is used is that the target size level is difficult to accurately measure with an optical microscope. For the fiber diameter, filler fibers to be measured for diameter are randomly extracted from an image obtained by observation under an electron microscope, the fiber diameters are measured near the center, and, from the measured values, the number average fiber diameter is calculated. The observation magnification is about 1,000×, and the number of fibers measured is 500 or more (600 or less is favorable in terms of workability). Meanwhile, for the measurement of the average fiber length, the filler is observed under an optical microscope, the individual lengths are determined, and, from the measured values, the number average fiber length is calculated. Observation under an optical microscope begins with preparing a sample in which fillers are dispersed so as not to overlap significantly with each other. Observation is performed using an objective lens of 20 magnifications, and the observed image is captured as image data by a CCD camera with about 250,000 pixels. From the obtained image, using an image analyzer, the fiber length is calculated using a program that determines the maximum distance between two points on the image data. Under such conditions, the size of one pixel corresponds to a length of 1.25 μm. The number of fibers measured is 500 or more (600 or less is favorable in terms of workability).

In order for wollastonite of the invention to fully reflect its original whiteness in the resin composition, it is preferable that iron that is mixed into the raw material ore, as well as iron that is mixed in due to wear of the equipment when the raw material ore is ground, is removed as much as possible using a magnetic separator. As a result of such a magnetic separator treatment, the iron content in wollastonite calculated as $Fe_2O_3$ is preferably 0.5 wt% or less.

The silicate mineral (more favorably mica, talc, or wollastonite) is preferably not surface-treated, but may be surface-treated with various surface treatment agents such as a silane coupling agent, a higher fatty acid ester, or a wax. Further, it may also be granulated with a binder such as any of various resins, higher fatty acid esters, and waxes into granules.

The content of component C is, per 100 parts by weight of the component including the component A and the component B, 5 to 45 parts by weight, preferably 8 to 40 parts by weight, and more preferably 10 to 35 parts by weight. When the content of component C is less than 5 parts by weight, a sufficient linear expansion coefficient is not obtained, while a content of more than 45 parts by weight makes extrusion difficult.

<Component D: Phosphorus-Based Stabilizer>

It is preferable that the resin composition of the invention contains a phosphorus-based stabilizer as a component D. As the phosphorus-based stabilizer, phosphorous acid, phosphoric acid, phosphonous acid, phosphonic acid, an ester thereof, a tertiary phosphine, and the like can be used, and a phosphonic acid ester is preferable. As the phosphonic acid ester, a phosphonic acid monoester, a phosphonic acid diester, and a phosphonic acid triester can be used, and a phosphonic acid triester is preferable. Various combinations of esters having 1 to 22 carbon atoms can be used, and triethyl phosphonoacetate is most preferable. The acid value of the phosphonic acid ester is preferably 0.01 to 0.30 mgKOH/g, more preferably 0.01 to 0.20 mgKOH/g, and still more preferably 0.05 to 0.15 mgKOH/g. Those having an acid value of less than 0.01 mgKOH/g are unrealistic in terms of production, while an acid value of more than 0.30 mgKOH/g may result in appearance defects such as silver streaks. For the measurement of the acid value, a potentiometric titrator was used, and an alcohol solution of the phosphonic acid ester was titrated with a KOH alcohol solution.

The content of component D is, per 100 parts by weight of the component including the component A and the component B, preferably 0.001 to 1 part by weight, more preferably 0.01 to 0.1 parts by weight, and still more preferably 0.01 to 0.07 parts by weight. In the case where the content of component D is less than 0.001 parts by weight, appearance defects such as silver streaks may occur. Meanwhile, because a sufficient effect is obtained with 1 part by weight or less, a content of more than 1 part by weight leads to increased cost.

<Regarding Other Components>

The resin composition of the invention can also incorporate phenol-based stabilizers, release agents, UV absorbers, core-shell type graft polymers, dyes and pigments (carbon black, titanium oxide, etc.), and the like.

(i) Phenol-Based Stabilizer and Other Heat Stabilizers

The resin composition of the invention can incorporate various heat stabilizers excluding phosphorus-based stabilizers, such as phenol-based stabilizers including hindered phenol compounds and the like. As hindered phenol compounds, various compounds that are usually incorporated into resins can be used. As such hindered phenol compounds, for example, α-tocopherol, butylated hydroxytoluene, sinapyl alcohol, vitamin E, octadecyl-3-(3,5-di-tert-butyl-4-hydroxyphenyl)propionate, 2-tert-butyl-6-(3'-tert-butyl-5'-methyl-2'-hydroxybenzyl)-4-methylphenylacrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl)propionate 1,6-hexanediol bis[3-(3,5-di-tert-butyl-4-hydroxyphenyl)propionate], bis[2-tert-butyl-4-methyl6-(3-tert-butyl-5-methyl-2-hydroxybenzyl) phenyl]terephthalate, 3,9-bis{2-[3-(3-tert-butyl-4-hydroxy-5-methylphenyl)propionyloxy]-1,1-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl) sulfide, 4,4'-di-thiobis(2,6-di-tert-butylphenol), 4,4'-tri-thiobis(2,6-di-tertbutylphenol), 2,2-thiodiethylenebis-[3-(3,5-di-tert-butyl-4-hydroxyphenyl)propionate], 2,4-bis(n-octylthio)-6-(4-hydroxy-3,5-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2, 6-dimethylbenzyl)isocyanurate, 1,3,5-tris2[3(3,5-di-tert-butyl-4-hydroxyphenyl)propionyloxy]ethyl isocyanurate, tetrakis[methylene-3-(3,5-di-tert-butyl-4-hydroxyphenyl)propionate]methane, triethylene glycol-N-bis-3-(3-tert-butyl-4-hydroxy-5-methylphenyl)propionate, triethylene glycol-N-bis-3-(3-tert-butyl-4-hydroxy-5-methylphenyl)acetate, 3,9-bis[2-{3-(3-tert-butyl-4-hydroxy-5-methylphenyl)acetyloxy}-1,1-dimethylethyl]-2,4,8,10-tetraoxaspiro[5,5]undecane, tetrakis [methylene-3-(3-tert-butyl-4-hydroxy-5-methylphenyl)propionate]methane, 1,3,5-trimethyl-2,4,6-tris(3-tert-butyl-4-hydroxy-5-methylbenzyl)benzene, tris(3-tert-butyl-4-hydroxy-5-methylbenzyl)isocyanurate, and the like can be given as examples. Among the above compounds, in the invention, tetrakis[methylene-3-(3-tert-butyl-4-hydroxy-5-methylphenyl) propionate]methane, octadecyl-3-(3,5-di-tert-butyl-4-hydroxyphenyl)propionate, and 3,9-bis[2-{3-(3-t-butyl-4-hydroxy-5-methylphenyl)propionyloxy}-1,1-dimethylethyl]-2,4,8,10-tetraoxaspiro[5,5]undecane are preferably used, and 3,9-bis[2-{3-(3-t-butyl-4-hydroxy-5-methylphenyl)propionyloxy}-1,1-dimethylethyl]-2,4,8,10-tetraoxaspiro[5,5]undecane is particularly preferable. The above hindered phenol-based compounds may be used alone, and it is also possible to use a combination of two or more kinds.

The content of phenol-based stabilizer is, per 100 parts by weight of the component including the component A and the component B, preferably 0.001 to 3.0 parts by weight, more preferably 0.01 to 2.0 parts by weight, and still more preferably 0.05 to 1.0 part by weight.

The polycarbonate resin composition of the invention can also incorporate other heat stabilizers besides the phosphorus-based stabilizers and phenol-based stabilizers described above. Such other heat stabilizers are preferably used together with any of these stabilizers and antioxidants, and particularly preferably used together with both. As such other heat stabilizers, for example, lactone-based stabilizers typified by a reaction product of 3-hydroxy-5,7-di-tert-butyl-furan-2-one with o-xylene (details of such stabilizers are described in JPH07-233160A) are given as favorable examples. Such a compound is commercially available as Irganox HP-136 (trademark, manufactured by CIBA SPECIALTY CHEMICALS), and this compound can be used. Further, stabilizers obtained by mixing this compound with various phosphite compounds and hindered phenol compounds are commercially available. For example, Irganox HP-2921 manufactured by the above company is given as a favorable example. Also in the invention, such a premixed stabilizer can also be used. The content of lactone-based stabilizer is, per 100 parts by weight of the component including the component A and the component B, preferably 0.0005 to 0.05 parts by weight, and more preferably 0.001 to 0.03 parts by weight.

In addition, as other stabilizers, sulfur-containing stabilizers such as pentaerythritol tetrakis(3-mercaptopropionate), pentaerythritol tetrakis(3-lauryl thiopropionate), and glycerol-3-stearyl thiopropionate are given as examples. Such stabilizers are particularly useful in the case where the resin composition is applied to rotational molding. The content of sulfur-containing stabilizer is, per 100 parts by weight of the component including the component A and the component B, preferably 0.001 to 0.1 parts by weight, and more preferably 0.01 to 0.08 parts by weight.

(ii) Release Agent

The polycarbonate resin composition of the invention may incorporate a release agent for the purpose of improving the productivity during its molding and reducing the distortion of the molded article. As such releasing agents, known ones can be used. For example, saturated fatty acid esters, unsaturated fatty acid esters, polyolefin-based waxes

(polyethylene wax, 1-alkene polymers, etc.; those modified with functional group-containing compounds, such as acid-modified ones, can also be used), silicone compounds, fluorine compounds (fluorine oils typified by polyfluoroalkyl ethers, etc.), paraffin wax, beeswax, and the like can be mentioned. Among them, as preferred release agents, fatty acid esters can be mentioned. Such fatty acid esters are esters of aliphatic alcohols and aliphatic carboxylic acids. Such an aliphatic alcohol may be a monohydric alcohol or a dihydric or higher polyhydric alcohol. In addition, the number of carbon atoms in the alcohol is within a range of 3 to 32, more favorably within a range of 5 to 30. As such monohydric alcohols, for example, dodecanol, tetradecanol, hexadecanol, octadecanol, eicosanol, tetracosanol, seryl alcohol, triacontanol, and the like are given as examples. As such polyhydric alcohols, pentaerythritol, dipentaerythritol, tripentaerythritol, polyglycerols (triglycerol to hexaglycerol), ditrimethylolpropane, xylitol, sorbitol, mannitol, and the like can be mentioned. In the fatty acid ester of the invention, polyhydric alcohols are more preferable. Meanwhile, the number of carbon atoms in the aliphatic carboxylic acid is preferably 3 to 32, and aliphatic carboxylic acids having 10 to 22 carbon atoms are particularly preferable. As such aliphatic carboxylic acids, for example, saturated aliphatic carboxylic acids, such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, behenic acid, icosanoic acid, and docosanoic acid, and unsaturated aliphatic carboxylic acids, such as palmitoleic acid, oleic acid, linoleic acid, linolenic acid, eicosenoic acid, eicosapentaenoic acid, and cetoleic acid, can be mentioned. Among the above, aliphatic carboxylic acids having 14 to 20 carbon atoms are preferable. Among them, saturated aliphatic carboxylic acids are preferable. Stearic acid and palmitic acid are particularly preferable. The above aliphatic carboxylic acids, such as stearic acid and palmitic acid, are usually produced from natural oils and fats, such as animal oils and fats typified by beef tallow, lard, and the like and vegetable oils and fats typified by palm oil and sunflower oil. Thus, these aliphatic carboxylic acids are usually mixtures containing other carboxylic acid components having different numbers of carbon atoms. Therefore, also in the production of the fatty acid ester of the invention, aliphatic carboxylic acids produced from such natural fats and oils and in the form of mixtures containing other carboxylic acid components, in particular, stearic acid and palmitic acid, are preferably used. The fatty acid ester may be either a partial ester or a full ester. However, because a partial ester usually has a high hydroxyl value and tends to induce resin decomposition at high temperatures, etc., a full ester is more favorable. The acid value of the fatty acid ester of the invention is, from the viewpoint of thermal stability, preferably 20 or less, more preferably within a range of 4 to 20, and still more preferably within a range of 4 to 12. Incidentally, the acid value can be substantially zero. In addition, the hydroxyl value of the fatty acid ester is more preferably within a range of 0.1 to 30. Further, the iodine value is preferably 10 or less. Incidentally, the iodine value can be substantially zero. These properties can be determined by the method specified in JIS K 0070.

The content of release agent is, per 100 parts by weight of the component including the component A and the component B, preferably 0.01 to 4.0 parts by weight, more preferably 0.05 to 3.0 parts by weight, and still more preferably 0.1 to 2.5 parts by weight.

(iii) UV Absorber

The polycarbonate resin composition of the invention can contain a UV absorber. As benzophenone-based ones, for example, 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, 2-hydroxy-4-methoxy-2'-carboxybenzophenone, and the like are given as examples. As benzotriazole-based ones, for example, 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolphenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole, as well as polymers having a 2-hydroxyphenyl-2H-benzotriazole skeleton, such as a copolymer of 2-(2'-hydroxy-5-methacryloxyethylphenyl)-2H-benzotriazole and a vinyl-based monomer copolymerizable with this monomer and a copolymer of 2-(2'-hydroxy-5-acryloxyethylphenyl)-2H-benzotriazole and a vinyl-based monomer copolymerizable with this monomer, and the like, are given as examples. As hydroxyphenyltriazine-based ones, for example, 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazine)-2-yl)-5-propyloxyphenol, 2-(4,6-diphenyl-1,3,5-triazin-2-yl)-5-butyloxyphenol, and the like are given as examples. Further, the above compounds with the phenyl group being a 2,4-dimethylphenyl group, such as 2-(4,6-bis(2,4-dimethylphenyl)-1,3,5-triazin-2-yl)-5-hexyloxyphenol, are given as examples. As cyclic iminoester-based ones, for example, 2,2'-p-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), and the like are given as examples.

As cyanoacrylate-based ones, for example, 1,3-bis-[(2'-cyano-3',3'-diphenylacryloyl)oxy]-2,2-bis[(2-cyano-3,3-diphenylacryloyl)oxy]methyl)propane, 1,3-bis-[(2-cyano-3,3-diphenylacryloyl)oxy]benzene, and the like are given as examples.

Further, the above UV absorber may also be a polymer type UV absorber that has the structure of a radically polymerizable monomer compound and thus is obtained by copolymerizing such an UV-absorbing monomer and/or a photostable monomer having a hindered amine structure with a monomer such as an alkyl (meth)acrylate. As such UV-absorbing monomers, compounds containing a benzotriazole skeleton, a benzophenone skeleton, a triazine skeleton, a cyclic imino ester skeleton, and a cyanoacrylate skeleton in the ester substituent of a (meth)acrylic acid ester are given as favorable examples.

The content of UV absorber is, per 100 parts by weight of the component including the component A and the component B, preferably 0.01 to 2.0 parts by weight, more preferably 0.02 to 1.5 parts by weight, and still more preferably 0.03 to 1.0 part by weight.

(iv) Core-Shell Type Graft Polymer

The polycarbonate resin composition of the invention can contain a core-shell type graft polymer. A core-shell type graft polymer is a graft copolymer obtained by copolymerizing a rubber component having a glass transition temperature of 10°C or less as a core with at least one monomer selected from aromatic vinyls, vinyl cyanides, acrylic acid esters, methacrylic acid esters, and vinyl compounds copolymerizable therewith as a shell.

As rubber components for the core-shell type graft polymer, butadiene rubber, butadiene-acrylic composite rubber, acrylic rubber, acrylic-silicone composite rubber, isobutylene-silicone composite rubber, isoprene rubber, styrene-butadiene rubber, chloroprene rubber, ethylenepropylene rubber, nitrile rubber, ethylene-acrylic rubber, silicone rubber, epichlorohydrin rubber, fluororubber, and these rubbers with hydrogen added to their unsaturated bonds can be mentioned. In view of the concern about the generation of harmful substances upon combustion, rubber components containing no halogen atom are preferable in terms of environmental load. The glass transition temperature of the rubber component is preferably -10°C or less, and more preferably -30°C or less. As the rubber component, butadiene rubber, butadiene-acrylic composite rubber, acrylic rubber, and acrylic-silicone composite rubber are particularly preferable. A composite rubber refers to a rubber made of two kinds of rubber components copolymerized or inseparably entangled with each other and polymerized to form an IPN structure. In the core-shell type graft polymer, the particle size of the core is, as a weight average particle size, preferably 0.05 to 0.8 μm, more preferably 0.1 to 0.6 μm, and still more preferably 0.15 to 0.5 μm. Within a range of 0.05 to 0.8 μm, improved impact resistance is achieved.

As aromatic vinyls in vinyl compounds to be copolymerized with the rubber component as the shell of the core-shell type graft polymer, styrene, α-methylstyrene, p-methylstyrene, alkoxy styrenes, halogenated styrenes, and the like can be mentioned. In addition, as acrylic acid esters, methyl acrylate, ethyl acrylate, butyl acrylate, cyclohexyl acrylate, octyl acrylate, and the like can be mentioned, while as methacrylic acid esters, methyl methacrylate, ethyl methacrylate, butyl methacrylate, cyclohexyl methacrylate, octyl methacrylate, and the like can be mentioned, and methyl methacrylate is particularly preferable. Among them, it is particularly preferable that a methacrylic acid ester, such as methyl methacrylate, is contained as an essential component. This is because such a core-shell type graft polymer has excellent affinity with an aromatic polycarbonate resin, leading to the presence of an increased amount of rubber component in the resin, which allows the aromatic polycarbonate resin to exhibit its good impact resistance more effectively, resulting in good impact resistance of the resin composition. More specifically, it is preferable that a methacrylic acid ester is contained in an amount of preferably 10 wt% or more, more preferably 15 wt% or more, in 100 wt% of the graft component (in the case of a core-shell type polymer, in 100 wt% of the shell). An elastomeric polymer containing a rubber component having a glass transition temperature of 10°C or less may be produced by any polymerization method such as bulk polymerization, solution polymerization, suspension polymerization, or emulsion polymerization, and the copolymerization technique may be one-stage grafting or several-stage grafting. In addition, it may also be a mixture with a copolymer composed only of the graft component by-produced during production. Further, as polymerization methods, in addition to the common emulsion polymerization method, a soap-free polymerization method using an initiator such as potassium peroxodisulfate, a seed polymerization method, a two-stage swelling polymerization method, and the like can also be mentioned. In addition, in a suspension polymerization method, it is also possible to perform a method in which an aqueous phase and a monomer phase are separately maintained and precisely fed to a continuous dispersing machine, and the particle size is controlled by the rotation speed of the dispersing machine; a method in which, in the continuous production method, a monomer phase is fed into an aqueous liquid having dispersive power through a small-diameter orifice that is several to several tens of micrometers in diameter or through a porous filter, thereby controlling the particle size; or the like. In the case where the graft polymer is a core-shell type, the reaction may be, both for the core and shell, a single-stage or multi-stage reaction.

Such polymers are commercially available and easy to obtain. For example, as those containing, as a rubber component, butadiene rubber as a main component, Kaneace M series (e.g., M-711 whose shell component contains

methyl methacrylate as a main component, M-701 whose shell component contains methyl methacrylate-styrene as a main component, etc.) manufactured by Kaneka Corporation, Metablen C series (e.g., C-223A whose shell component contains methyl methacrylate-styrene as a main component) and E series (e.g., E-870A whose shell component contains methyl methacrylate-styrene as a main component) manufactured by Mitsubishi Rayon Co., Ltd., and Paraloid EXL series (e.g., EXL-2690 whose shell component contains methyl methacrylate as a main component) manufactured by Dow Chemical Company can be mentioned, and as those containing acrylic rubber or butadiene-acrylic composite rubber as a main component, W series (e.g., W-600A whose shell component contains methyl methacrylate as a main component) and Pararoid EXL Series (e.g., EXL-2390 whose shell component contains methyl methacrylate as a main component) manufactured by Dow Chemical Company can be mentioned. As those containing, as a rubber component, acrylic-silicone composite rubber as a main component, those commercially available under trade names Metablen S-2501, whose shell component contains methyl methacrylate as a main component, and SX-200R, whose shell component contains acrylonitrile-styrene as a main component, which are manufactured by Mitsubishi Rayon Co., Ltd., can be mentioned.

(v) Other Resins

The polycarbonate resin composition of the invention can also use small amounts of other resins as long as the effects of the invention can be produced. As such other resins, for example, resins such as AES resins, ASA resins, polyester resins, polyamide resins, polyimide resins, polyetherimide resins, polyurethane resins, silicone resins, polyphenylene ether resins, polyphenylene sulfide resins, polysulfone resins, polymethacrylate resins, phenol resins, and fluorine resins can be mentioned.

(vi) Dyes and Pigments

The polycarbonate resin composition of the invention can further contain various dyes and pigments to provide molded articles that exhibit various design features. By incorporating a fluorescent brightener or other light-emitting fluorescent dyes, even better design effects taking advantage of the luminescent color can be imparted. In addition, it is also possible to provide a polycarbonate resin composition colored with an extremely small amount of dye or pigment and having vivid color-forming properties.

As fluorescent dyes (including fluorescent brighteners) used in the invention, for example, coumarin-based fluorescent dyes, benzopyran-based fluorescent dyes, perylene-based fluorescent dyes, anthraquinone-based fluorescent dyes, thioindigo-based fluorescent dyes, xanthene-based fluorescent dyes, xanthone-based fluorescent dyes, thioxanthene-based fluorescent dyes, thioxanthone-based fluorescent dyes, thiazine-based fluorescent dyes, diaminostilbene-based fluorescent dyes, and the like can be mentioned. Among them, coumarin-based fluorescent dyes, benzopyran-based fluorescent dyes, and perylene-based fluorescent dyes, which have good heat resistance and deteriorate less during the molding of the polycarbonate resin, are favorable.

As dyes other than the fluorescent dyes described above, perylene-based dyes, coumarin-based dyes, thioindigo-based dyes, anthraquinone-based dyes, thioxanthone-based dyes, ferrocyanides such as Prussian blue, perinone-based dyes, quinoline-based dyes, quinacridone-based dyes, dioxazine-based dyes, isoindolinone-based dyes, phthalocyanine dyes-based, and the like can be mentioned. Further, the resin composition of the invention can also incorporate metallic pigments to obtain improved metallic colors. As metallic pigments, those having a metal coating or metal oxide coating on various plate-like fillers are favorable.

The content of dye and pigment is, per 100 parts by weight of the component including the component A and the component B, preferably 0.00001 to 1 part by weight, and more preferably 0.00005 to 0.5 parts by weight.

(vii) Flame Retardant

The polycarbonate resin composition of the invention can contain various compounds conventionally known as flame retardants for thermoplastic resins, especially for polycarbonate-based resins. More favorable examples are (i) halogen-based flame retardants (e.g., brominated polycarbonate compounds, etc.), (ii) phosphorus-based flame retardants (e.g., monophosphate compounds, phosphate oligomer compounds, phosphonate oligomer compounds, phosphonitrile oligomer compounds, phosphonic acid amide compounds, phosphazene compounds, etc.), (iii) metal salt-based flame retardants (e.g., organic sulfonic acid alkali (earth) metal salts, boric acid metal salt-based flame retardants, stannic acid metal salt-based flame retardants, etc.), and (iv) silicone-based flame retardants composed of silicone compounds. Incidentally, the incorporation of compounds used as flame retardants not only improves flame retardancy, but also brings about improvement in, for example, antistatic properties, fluidity, rigidity, and thermal stability based on the properties of each compound, etc.

The content of flame retardant is, per 100 parts by weight of the component including the component A and the

component B, preferably 0.01 to 30 parts by weight, more preferably 0.05 to 28 parts by weight, and still more preferably 0.08 to 25 parts by weight. In the case where the content of flame retardant is less than 0.01 parts by weight, sufficient flame retardancy may not be obtained, while a content of more than 30 parts by weight may lead to a significant decrease in mechanical properties.

(viii) White Pigment for High Light Reflection

The polycarbonate resin composition of the invention can incorporate a white pigment for high light reflection to impart a light-reflecting effect. As such white pigments, zinc sulfide, zinc oxide, barium sulfate, calcium carbonate, calcined kaolin, and the like can be mentioned. The content of white pigment for high light reflection is, per 100 parts by weight of the component including the component A and the component B, preferably 1 to 30 parts by weight, and more preferably 3 to 25 parts by weight. Incidentally, it is possible to use two or more kinds of white pigments for high light reflection together.

(ix) Other Additives

In addition, in order to impart various functions to molded articles or improve their properties, the resin composition of the invention can incorporate additives known per se in small proportions. These additives are incorporated in usual amounts as long as the effects of the invention are not impaired. As such additives, sliding agents (e.g., PTFE particles), colorants (e.g., pigments such as carbon black, dyes), light diffusing agents (e.g., acrylic cross-linked particles, silicon cross-linked particles, ultra-thin glass flakes, calcium carbonate particles), fluorescent dyes, inorganic phosphors (e.g., phosphors with aluminate as the host crystal), antistatic agents, crystal nucleating agents, inorganic and organic antibacterial agents, photocatalytic antifouling agents (e.g., particulate titanium oxide, particulate zinc oxide), radical generators, IR absorbers (heat ray absorbers), photochromic agents, and the like can be mentioned.

<Method for Preparing Polycarbonate Resin Composition>

The polycarbonate resin composition of the invention is prepared by mixing the above components simultaneously or in any order using a mixing machine such as a tumbler, V type blender, Nauta mixer, Banbury mixer, kneading roll, extruder, or the like. As a mixing machine, melt kneading using a twin-screw extruder is preferable, and, as necessary, it is preferable that an arbitrary component is fed into melt-mixed other components through a second feed port using a side feeder or the like. The resin extruded as above is either directly cut into pellets, or formed into strands and then cut with a pelletizer into pellets. In the case where it is necessary to reduce the influence of external dust or the like during pelletization, it is preferable to clean the atmosphere around the extruder. The shape of the obtained pellets may be any common shape such as cylindrical, prismatic, or spherical, and a cylindrical shape is more favorable. The diameter of such a cylinder is preferably 1 to 5 mm, more preferably 1.5 to 4 mm, and still more preferably 2 to 3.5 mm. Meanwhile, the length of the cylinder is preferably 1 to 30 mm, more preferably 2 to 5 mm, and still more preferably 2.5 to 4 mm.

<Regarding Molded Article Made of Polycarbonate Resin Composition of the Invention>

From the polycarbonate resin composition of the invention, various products can be produced usually by injection-molding the pellets obtained by the above method. In such injection molding, molded articles can be obtained not only by usual molding methods but also using, suitably depending on the purpose, injection compression molding, injection press molding, gas-assisted injection molding, foam molding (including molding by injecting a supercritical fluid), insert molding, in-mold coating molding, heat-insulating molding, rapid heating and cooling molding, two-color molding, sandwich molding, ultra-high speed injection molding, and like injection molding methods. These various molding methods are advantageous in that they are already widely known. In addition, for molding, either the cold runner technique or the hot runner technique can be selected.

The best mode of the invention presently contemplated by the present inventors is an aggregation of the preferred ranges of requirements described above, and, as examples, representative examples thereof will be described in the following examples. Needless to say, the invention is not limited to these modes.

Examples

Hereinafter, the invention will be further described with reference to examples. Incidentally, evaluation was performed by the following methods.

(i) Linear Expansion Coefficient

An ISO tensile test specimen obtained by the method described below was annealed (dried at 110°C × 1 h) and then cut into a 5 mm square test specimen. Defining the flow direction of the resin during injection molding as the measurement direction, the linear expansion coefficient of the test piece was measured at -30°C to 80°C at a heating rate of 2°C/min using the linear expansion coefficient measuring apparatus "TMA4000SE" manufactured by NETZSCH. In the polycarbonate resin composition of the invention, it is necessary that the linear expansion coefficient loss value per part by weight of the component C calculated using the following formula is made 0.15 × $10^{-5}$/°C or more.

Linear expansion coefficient loss value per part by weight of the component C = (the linear expansion coefficient of the component including the component A and the component B - the linear expansion coefficient of the polycarbonate resin composition of the invention)/the content of component C

(ii) Appearance of Molded Article

After obtaining an ISO tensile test piece by the method described below, the molding machine was stopped for 10 minutes under the same conditions as in the method described below, and the molten resin was retained in the cylinder of the molding machine. Molding was started again 10 minutes after the molding machine was stopped, and an ISO tensile test piece was obtained from the second shot of remolding. The test piece before stopping the molding machine was defined as continuous molded article, while the test piece after the second shot from remolding was defined as retention molded article, and the appearance of each was evaluated visually. Incidentally, the evaluation was performed according to the following criteria.

A: No appearance defects were observed in either the continuous molded article or the retention molded article.
B: No appearance defects were observed in the continuous molded article, but the retention molded article had appearance defects such as silver streaks.
C: Both the continuous molded article and the retention molded article had appearance defects such as silver streaks.

(iii) Deflection Temperature under Load

Using an ISO bending test piece obtained by the method described below, the deflection temperature under load (load: 1.80 MPa) was measured in accordance with ISO 75-1 and ISO 75-2. In the polycarbonate resin composition of the invention, it is necessary that the deflection temperature under load is made 90°C or more.

(iv) Flowability

Using the pellets obtained by the method described below, the Archimedes spiral flow length with a flow channel thickness of 2 mm and a flow channel width of 8 mm was measured using an injection molding machine [SE130EV-A manufactured by Sumitomo Heavy Industries, Ltd.]. Incidentally, the measurement was performed at a cylinder temperature of 260°C, a mold temperature of 70°C, and an injection pressure of 98 MPa. In the polycarbonate resin composition of the invention, it is necessary that the spiral flow length is made 20 cm or more.

[Examples 1 to 19 and Comparative Examples 1 to 8]

Mixtures of the components shown in Tables 1 and 2, excluding the ABS resin as the component B and the silicate mineral as the component C, were each fed through a first feed port of the extruder. This mixture was obtained by mixing in a V type blender. The ABS resin as the component B and the silicate mineral as the component C were each fed through a second feed port using a side feeder. Extrusion was performed using a vented twin-screw extruder having a diameter of 30 mmφ (TEX30α-38.5BW-3V manufactured by Japan Steel Works, Ltd.). The mixture was melt-kneaded at a screw rotation speed of 230 rpm, a discharge rate of 25 kg/h, and a vent vacuum of 3 kPa to give pellets. Incidentally, the extrusion temperature was 260°C from the first feed port to the die portion. The obtained pellets were dried in a hot-air circulation dryer at 110°C for 6 hours, then, using an injection molding machine (cylinder temperature: 260°C, mold temperature: 60°C), molded into an ISO bending test piece and an ISO tensile test piece for evaluation, and subjected to each evaluation. The results are shown in Tables 1 and 2.

Incidentally, the raw materials used were as follows.

(Component A)

A-1: Aromatic polycarbonate resin (polycarbonate resin powder having a viscosity average molecular weight of 19,800 made in a usual manner from bisphenol A and phosgene, Panlite L-1225WX (product name) manufactured by Teijin Limited)
A-2: Aromatic polycarbonate resin (polycarbonate resin powder having a viscosity average molecular weight of 22,400 made in a usual manner from bisphenol A and phosgene, Panlite L-1225WP (product name) manufactured by Teijin Limited)
A-3: Aromatic polycarbonate resin (polycarbonate resin powder having a viscosity average molecular weight of 16,000 made in a usual manner from bisphenol A and phosgene, Panlite CM-1000 (product name) manufactured by Teijin Limited)

(Component B)

B-1: ABS resin ($SO_4^{2-}$ content: 3.4 ppm, $PO_4^{3-}$ content: 0.01 ppm, GA-704 (product name) manufactured by Nippon A&L Inc.)
B-2: ABS resin ($SO_4^{2-}$ content: 4.0 ppm, $PO_4^{3-}$ content: 0.01 ppm, SXH-330 (product name) manufactured by Nippon A&L Inc.)
B-3: ABS resin ($SO_4^{2-}$ content: 3.2 ppm, $PO_4^{3-}$ content: 0.01 ppm, AF-3510 (product name) manufactured by Formosa Chemical & Fibre Corp.)
B-4: ABS resin ($SO_4^{2-}$ content: 0.02 ppm, $PO_4^{3-}$ content: 0.01 ppm, AT-05 (product name) manufactured by Nippon A&L Inc.)
B-5: ABS resin ($SO_4^{2-}$ content: 5.1 ppm, $PO_4^{3-}$ content: 5.2 ppm, ABS250 (product name) manufactured by INEOS ABS CO., LTD.)
B-6: ABS resin (mixture of B-1 and B-4 (weight ratio: 1:1), $SO_4^{2-}$ content: 1.7 ppm, $PO_4^{3-}$ content: 0.01 ppm)
B-7: ABS resin (mixture of B-1 and B-5 (weight ratio: 4:1), $SO_4^{2-}$ content: 3.7 ppm, $PO_4^{3-}$ content: 1.1 ppm)
B-8: ABS resin (mixture of B-1 and B-4 (weight ratio: 1:5), $SO_4^{2-}$ content: 0.6 ppm, $PO_4^{3-}$ content: 0.01 ppm)
B-9: ABS resin (mixture of B-1 and B-5 (weight ratio: 2:1), $SO_4^{2-}$ content: 4.0 ppm, $PO_4^{3-}$ content: 1.8 ppm)

(Component C)

C-1: Talc (TK-RC (product name) manufactured by Shokozan Mining Co., Ltd.)
C-2: Mica (GM-6 (product name) manufactured by Kinsei Matec Co., Ltd.)
C-3: Wollastonite (SH-1800 (product name) manufactured by Kinsei Matec Co., Ltd.)

(Component D)

D-1: Triethyl phosphonoacetate (JC-224 (product name) manufactured by Johoku Chemical Co., Ltd., acid value: 0.08 mgKOH/g)
D-1: Triethyl phosphonoacetate (manufactured by Solvay, acid value: 0.39 mgKOH/g)

(Other Components)

E-1: Phenol-based heat stabilizer (octadecyl-3-(3,5-di-tert-butyl-4-hydroxyphenyl)propionate, Irganox 1076 (product name) manufactured by BASF Japan Ltd.)
E-2: Butadiene-based core-shell type graft polymer (graft copolymer having a core-shell structure in which the core is 60 wt% with butadiene rubber as a main component, and the shell is 40 wt% with methyl methacrylate as a main component, Kaneace M-711 (product name) manufactured by Kaneka Corporation)
E-3: Polyethylene terephthalate resin (TRN-MTJ (product name) manufactured by Teijin Limited)
E-4: Carbon black (ROYAL BLACK RB90003S (product name) manufactured by Koshigaya Kasei Co., Ltd.)

[Table 1]

| Item | | | Unit | Examples | | | | | | | | | | | | | | | | | | |
|---|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 | 16 | 17 | 18 | 19 |
| Compoisition | Component A | A-1 | Parts by Weight | 62 | 62 | | 32 | 80 | 30 | 62 | 62 | 62 | 62 | 62 | 62 | 62 | 62 | 62 | 62 | 62 | 62 | 62 |
| | | A-2 | " | | | 62 | | | | | | | | | | | | | | | | |
| | | A-3 | " | | | | 30 | | | | | | | | | | | | | | | |
| | Component B | B-1 | " | 38 | 38 | 38 | 38 | 20 | 70 | | | | | 38 | 38 | 38 | 38 | 38 | 38 | 38 | 38 | 38 |
| | | B-2 | " | | | | | | | 38 | | | | | | | | | | | | |
| | | B-3 | " | | | | | | | | 38 | | | | | | | | | | | |
| | | B-4 | " | | | | | | | | | | | | | | | | | | | |
| | | B-5 | " | | | | | | | | | | | | | | | | | | | |
| | | B-6 | " | | | | | | | | | 38 | | | | | | | | | | |
| | | B-7 | " | | | | | | | | | | 38 | | | | | | | | | |
| | | B-8 | " | | | | | | | | | | | | | | | | | | | |
| | | B-9 | " | | | | | | | | | | | | | | | | | | | |
| | Component A + Component B | | " | 100 | 100 | 100 | 100 | 100 | 100 | 100 | 100 | 100 | 100 | 100 | 100 | 100 | 100 | 100 | 100 | 100 | 100 | 100 |
| | Component C | C-1 | " | 25 | 25 | 25 | 25 | 25 | 25 | 25 | 25 | 25 | 25 | 10 | 35 | | | 25 | 25 | 25 | 25 | 25 |
| | | C-2 | " | | | | | | | | | | | | | 25 | | | | | | |
| | | C-3 | " | | | | | | | | | | | | | | 25 | | | | | |
| | Component D | D-1 | " | | 0.08 | 0.08 | 0.08 | 0.08 | 0.08 | 0.08 | 0.08 | 0.08 | 0.08 | 0.08 | 0.08 | 0.08 | 0.08 | | 0.08 | 0.08 | 0.08 | 0.08 |
| | | D-2 | " | | | | | | | | | | | | | | | 0.08 | | | | |
| | Other Components | E-1 | " | | | | | | | | | | | | | | | | 0.1 | 0.1 | 0.1 | 0.1 |
| | | E-2 | " | | | | | | | | | | | | | | | | | 5 | | |
| | | E-3 | " | | | | | | | | | | | | | | | | | | 1 | 1 |
| | | E-4 | " | | | | | | | | | | | | | | | | | | | 1 |

(continued)

| Item | | Unit | Examples | | | | | | | | | | | | | | | | | | |
|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 | 19 |
| Evaluation Results | Linear Expansion Coefficient of Component A + Component B | $\times 10^{-5}$/°C | 7.9 | 7.9 | 7.9 | 7.9 | 7.3 | 8.6 | 7.9 | 8.0 | 7.9 | 7.9 | 7.9 | 7.9 | 7.9 | 7.9 | 7.9 | 7.9 | 8.2 | 7.9 | 7.9 |
| | Linear Expansion Coefficient | $\times 10^{-5}$/°C | 3.9 | 3.9 | 3.9 | 3.9 | 3.4 | 4.3 | 3.9 | 3.9 | 4.0 | 4.1 | 5.9 | 2.6 | 3.8 | 3.6 | 3.9 | 3.9 | 4.2 | 3.9 | 3.9 |
| | Linear Expansion Coefficient Loss Value per Part by Weight of Component C | $\times 10^{-5}$/°C | 0.16 | 0.16 | 0.16 | 0.16 | 0.16 | 0.17 | 0.16 | 0.16 | 0.16 | 0.15 | 0.20 | 0.15 | 0.16 | 0.17 | 0.16 | 0.16 | 0.16 | 0.16 | 0.16 |
| | Appearance | - | B | A | A | A | A | A | A | A | A | A | A | A | A | A | B | A | A | A | A |
| | Deflection Temperature under Load | °C | 110 | 110 | 110 | 110 | 120 | 95 | 110 | 110 | 110 | 110 | 109 | 110 | 110 | 111 | 110 | 110 | 108 | 110 | 110 |
| | Flowability | cm | 30 | 30 | 27 | 34 | 23 | 50 | 30 | 30 | 31 | 30 | 31 | 28 | 30 | 30 | 30 | 30 | 29 | 30 | 30 |

[Table 2]

| Item | | | Unit | Comparative Examples | | | | | | | |
|---|---|---|---|---|---|---|---|---|---|---|---|
| | | | | 1 | 2 | 3 | 4 | 5 | 6 | 7 | 8 |
| Compoisition | Component A | A-1 | Parts by Weight | 95 | 15 | 62 | 62 | 62 | 62 | 62 | 62 |
| | | A-2 | " | | | | | | | | |
| | | A-3 | " | | | | | | | | |
| | Component B | B-1 | " | 5 | 85 | | | | | 38 | 38 |
| | | B-2 | " | | | | | | | | |
| | | B-3 | " | | | | | | | | |
| | | B-4 | " | | | 38 | | | | | |
| | | B-5 | " | | | | 38 | | | | |
| | | B-6 | " | | | | | | | | |
| | | B-7 | " | | | | | | | | |
| | | B-8 | " | | | | | 38 | | | |
| | | B-9 | " | | | | | | 38 | | |
| | Component A + Component B | | " | 100 | 100 | 100 | 100 | 100 | 100 | 100 | 100 |
| | Component C | C-1 | " | 25 | 25 | 25 | 25 | 25 | 25 | 3 | 50 |
| | | C-2 | " | | | | | | | | |
| | | C-3 | " | | | | | | | | |
| | Component D | D-1 | " | 0.08 | 0.08 | 0.08 | 0.08 | 0.08 | 0.08 | 0.08 | 0.08 |
| | | D-2 | " | | | | | | | | |
| | Other Components | E-1 | " | | | | | | | | |
| | | E-2 | " | | | | | | | | |
| | | E-3 | " | | | | | | | | |
| | | E-4 | " | | | | | | | | |
| Evaluation Results | Linear Expansion Coefficient of Component A + Component B | | $\times 10^{-5}$/°C | 7.2 | 9.0 | 8.0 | 7.9 | 7.9 | 7.9 | 7.9 | Non-extrudable |
| | Linear Expansion Coefficient | | $\times 10^{-5}$/°C | 3.4 | 5.1 | 4.4 | 4.5 | 4.4 | 4.3 | 7.5 | |
| | Linear Expansion Coefficient Loss Value per Part by Weight of Component C | | $\times 10^{-5}$/°C | 0.15 | 0.16 | 0.14 | 0.14 | 0.14 | 0.14 | 0.13 | |
| | Appearance | | - | A | A | A | A | A | A | A | |
| | Deflection Temperature under Load | | °C | 126 | 87 | 110 | 108 | 110 | 109 | 109 | |
| | Flowability | | cm | 16 | 66 | 34 | 32 | 33 | 31 | 33 | |

From the above tables, it can be seen that by adding predetermined amounts of specific ABS resin and silicate mineral to a polycarbonate-based resin, a polycarbonate resin composition that is excellent in flowability and heat resistance and has a low linear expansion coefficient can be obtained.

## Claims

1. A polycarbonate resin composition comprising, per 100 parts by weight of a component including 20 to 90 parts by weight of (A) a polycarbonate-based resin (component A) and 80 to 10 parts by weight of (B) an ABS resin (component B), 5 to 45 parts by weight of (C) a silicate mineral (component C), wherein the component B has an $SO_4^{2-}$ content of 1 ppm or more and a $PO_4^{3-}$ content of less than 1.5 ppm.

2. The polycarbonate resin composition according to claim 1, comprising 0.001 to 1 part by weight of (D) a phosphorus-based stabilizer (component D) per 100 parts by weight of the component including the component A and the component **B.**

3. The polycarbonate resin composition according to claim 2, wherein the component D is a phosphonic acid ester having an acid value of 0.01 to 0.30 mgKOH/g.

4. The polycarbonate resin composition according to claim 3, wherein the component D is triethyl phosphonoacetate.

5. A molded article made of the polycarbonate resin composition according to any of claims 1 to 4.

**INTERNATIONAL SEARCH REPORT**

International application No. **PCT/JP2023/019443**

**A. CLASSIFICATION OF SUBJECT MATTER**

***C08L 69/00***(2006.01)i; ***C08K 3/34***(2006.01)i; ***C08K 5/521***(2006.01)i; ***C08L 55/02***(2006.01)i
FI: C08L69/00; C08L55/02; C08K5/521; C08K3/34

According to International Patent Classification (IPC) or to both national classification and IPC

**B. FIELDS SEARCHED**

Minimum documentation searched (classification system followed by classification symbols)

C08L69/00; C08K3/34; C08K5/521; C08L55/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2014-105276 A (TEIJIN LTD.) 09 June 2014 (2014-06-09)<br>claims, paragraphs [0007], [0067]-[0072], [0079]-[0092], [0112]-[0125], examples, ABS-1, ABS-2 | 1-3, 5<br>4 |
| X<br>A | JP 2015-21070 A (TEIJIN LTD.) 02 February 2015 (2015-02-02)<br>claims, paragraphs [0006], [0071]-[0076], [0085]-[0095], [0111]-[0124], examples, ABS, TMP | 1-3, 5<br>4 |
| A | JP 2003-138122 A (NIPPON A & L KK) 14 May 2003 (2003-05-14) | 1-5 |
| A | WO 2020/209101 A1 (MITSUBISHI ENGINEERING-PLASTICS CORP.) 15 October 2020 (2020-10-15) | 1-5 |
| A | JP 2021-28350 A (IDEMITSU KOSAN CO., LTD.) 25 February 2021 (2021-02-25) | 1-5 |
| A | JP 56-70054 A (TEIJIN CHEMICALS LTD.) 11 June 1981 (1981-06-11) | 1-5 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 July 2023** | **08 August 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/019443**

**C. DOCUMENTS CONSIDERED TO BE RELEVANT**

| Category* | Citation of document, with indication, where appropriate, of the relevant passages | Relevant to claim No. |
|---|---|---|
| P, X | JP 2022-115666 A (NIPPON A & L KK) 09 August 2022 (2022-08-09) | 1-5 |

Form PCT/ISA/210 (second sheet) (January 2015)

**INTERNATIONAL SEARCH REPORT**
**Information on patent family members**

International application No.
**PCT/JP2023/019443**

| Patent document cited in search report | Publication date (day/month/year) | Patent family member(s) | Publication date (day/month/year) |
|---|---|---|---|
| JP 2014-105276 A | 09 June 2014 | (Family: none) | |
| JP 2015-21070 A | 02 February 2015 | (Family: none) | |
| JP 2003-138122 A | 14 May 2003 | (Family: none) | |
| WO 2020/209101 A1 | 15 October 2020 | JP 2020-172635 A | |
| | | CN 113661208 A | |
| JP 2021-28350 A | 25 February 2021 | WO 2019/054193 A1 | |
| | | TW 201920491 A | |
| JP 56-70054 A | 11 June 1981 | (Family: none) | |
| JP 2022-115666 A | 09 August 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020158663 A
- JP 2004168822 A
- JP H06172508 A
- JP H0827370 A
- JP 2001055435 A
- JP 2002117580 A
- JP H05306336 A
- JP H07233160 A